(19) Europäisches Patentamt
European Patent Office
Office européen des brevets

(11) EP 2 902 438 B1

(12) # EUROPEAN PATENT SPECIFICATION

(45) Date of publication and mention of the grant of the patent:
**30.03.2016 Bulletin 2016/13**

(51) Int Cl.:
***C08L 23/12*** *(2006.01)*

(21) Application number: **14153063.4**

(22) Date of filing: **29.01.2014**

(54) **High flow polyolefin composition with high stiffness and puncture resistance**

Polyolefinzusammensetzung mit hohem Durchfluss mit hoher Steifigkeit und Durchstechfestigkeit

Composition de polyoléfine à flux élevé avec une grande rigidité et résistance aux perforations

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.08.2015 Bulletin 2015/32**

(73) Proprietor: **Borealis AG**
**1220 Vienna (AT)**

(72) Inventors:
- **Kahlen, Susanne**
  **4060 Leonding (AT)**
- **Sandholzer, Martina**
  **4030 Linz (AT)**
- **Grestenberger, Georg**
  **3352 St. Peter in der Au (AT)**
- **Braun, Juliane**
  **4040 Linz (AT)**
- **Pramer, Hansjörg**
  **4201 Gramastetten (AT)**

(74) Representative: **Lux, Berthold**
**Maiwald Patentanwalts GmbH**
**Elisenhof**
**Elisenstraße 3**
**80335 München (DE)**

(56) References cited:
**EP-A1- 2 415 831** **EP-A1- 2 666 818**
**WO-A1-2013/010879**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 902 438 B1

## Description

The present invention is directed to a polyolefin composition having improved properties such as an excellent balance of stiffness, toughness and flowability. The polyolefin composition according to the present invention comprises a mixture of two defined heterophasic propylene copolymers. The present invention is further directed to the use of a heterophasic propylene copolymer for improving puncture resistance of a polyolefin composition.

One application of the heterophasic propylene copolymers is its use as packaging material. In this market segment, down-gauging and light-weighing is a recurring market need, since it allows for energy and material savings. In order to provide a material equipped with these features, a high stiff material with good impact properties needs to be developed. The high stiffness enables lower wall thicknesses. Furthermore, a cycle time reduction is possible since a certain stiffness needed for demoulding of the specimen is reached at shorter cooling times. However, the impact performance, which determines application performance like drop height, needs to stay on a high level. Additionally, the materials should show high flowability. Otherwise injection moulding of specimen with thin wall thickness is not possible. High flow materials generally show high stiffness due to shorter polymer chains having high stereoregularity. However, the impact performance becomes reduced due to shorter polymer chains, which form less entanglement.

Thus, the object of the present invention is to obtain a material of high flowability and stiffness and good impact performance. In particular, it is an object of the present invention to obtain a material having a high flowability, a high stiffness, a high puncture energy and a high Charpy impact strength.

The specific finding of the present invention is to provide a polymer composition based on two heterophasic propylene copolymers in which the xylene soluble fractions of the both differ in their intrinsic viscosities.

Thus, the present invention provides a polyolefin composition comprising

(a) a first heterophasic propylene copolymer (HECO1) having

(i) a melt flow rate $MFR_2$ (230 °C) measured according to ISO 1133 in the range of 40.0 to 60.0 g/10min, and
(ii) a xylene cold soluble content (XCS) determined according ISO 16152 (25 °C) of at least 15 wt.-%, like at least 18 wt.-%,
wherein further
(iii) the intrinsic viscosity (IV) determined according to DIN ISO 1628/1 (in decalin at 135 °C) of the xylene cold soluble (XCS) fraction of the heterophasic propylene copolymer (HECO1) is in the range of 2.5 to 4.3 dl/g, and

(b) a second heterophasic propylene copolymer (HECO2) comprising a propylene homopolymer (H-PP2) and an elastomeric propylene copolymer (E2), wherein

(i) said second heterophasic propylene copolymer (HECO2) has a melt flow rate $MFR_2$ (230°C) measured according to ISO 1133 in the range of above 1.0 to 8.0 g/10min;
(ii) the xylene cold soluble (XCS) fraction of the second heterophasic propylene copolymer (HECO2) has an intrinsic viscosity determined according to DIN ISO 1628/1 (in decalin at 135 °C) in the range of more than 3.7 to 9.0 dl/g; and
(iii) the comonomer content of the xylene cold soluble (XCS) fraction of the second heterophasic propylene copolymer (HECO2) is in the range of 10.0 to 40.0 wt.-%,

wherein

- the weight ratio of the first heterophasic propylene copolymer (HECO1) and the second heterophasic propylene copolymer (HECO2) [(HECO1)/(HECO2)] is in the range of 9:1 to 200:1;
  and/or
- the amount of the second heterophasic propylene copolymer (HECO2) in the polyolefin composition is equal or below 10 wt.-%, based on the total weight of the polyolefin composition.

Preferably the intrinsic viscosity of xylene cold soluble (XCS) fraction of the second heterophasic propylene copolymer (HECO2) is higher than the intrinsic viscosity of xylene cold soluble (XCS) fraction of the first heterophasic propylene copolymer (HECO1).

Preferably the polyolefin composition has a melt flow rate $MFR_2$ (230 °C) measured according to ISO 1133 of at least 40 g/10min, preferably in the range of 40.0 to 60.0 g/10min In one embodiment the polyolefin composition has a melt flow rate $MFR_2$ (230 °C) measured according to ISO 1133 of at least 40 g/10min, preferably in the range of 40.0 to 60.0 g/10min

Preferably the polyolefin composition of the present invention has

(a) a tensile modulus measured according to ISO 572-2 of at least 1,310 MPa, like in the range of 1,310 to 1,500 MPa; and/or

(b) a Charpy notched impact measured according to ISO 179 2C / DIN 53453 (-20 °C) of at least 4.0 kJ/$m^2$, like in the range of 4.0 to 6.0 kJ/$m^2$, and/or a Charpy notched impact measured according to ISO 179 2C / DIN 53453 (23 °C) of at least 9.0 kJ/$m^2$, like in the range of 9.0 to 13.0 kJ/$m^2$;
and/or

(c) a puncture energy (23 °C) measured according to ISO 6603-2 of at least 10.0 J, like in the range of 10.0 to 14.0 J.

Preferably the second heterophasic propylene copolymer (HECO2) has a xylene cold soluble content (XCS) determined according ISO 16152 (25 °C) of below 40 wt.-%, preferably in the range of 8 to 35 wt.-%.

In one preferred embodiment the second heterophasic propylene copolymer (HECO2) fulfills the in-equation (IV)

$$0.50 \geq \left(0.241 \times \frac{C}{wt.-\%}\right) - \left(1.14 \times \frac{IV}{dl/g}\right) \qquad \text{(IV)}$$

wherein

C is the comonomer content in wt.-% of the xylene cold soluble (XCS) fraction of the second heterophasic propylene copolymer (HECO2), and
IV is the intrinsic viscosity in dl/g of the xylene cold soluble (XCS) fraction of the second heterophasic propylene copolymer (HECO2).

In one preferred embodiment the polyolefin composition comprises additionally a nucleating agent, preferably a $\alpha$-nulceating agent. Preferably the amount of nucleating agent, more preferably the amount of $\alpha$-nulceating agent, is up to 2.0 wt.-%, more preferably up to 1.0 wt.-%.

Further preferred embodiments of the present invention are described in the attached dependent claims.

**Detailed description**

The mentioned above, the polyolefin composition according to the present invention comprises two specific heterophasic propylene copolymers.

The expression "heterophasic propylene copolymer" or "heterophasic" as used in the instant invention indicates that an elastomeric propylene copolymer is (finely) dispersed in a (semi) crystalline polypropylene. In other words the (semi) crystalline polypropylene constitutes a matrix in which the elastomeric propylene copolymer forms inclusions in the matrix, i.e. in the (semi) crystalline polypropylene. Thus the matrix contains (finely) dispersed inclusions being not part of the matrix and said inclusions contain the elastomeric propylene copolymer. The term "inclusion" according to this invention shall preferably indicate that the matrix and the inclusion form different phases within the heterophasic system, said inclusions are for instance visible by high resolution microscopy, like electron microscopy or atomic force microscopy, or by dynamic mechanical thermal analysis (DMTA). Specifically in DMTA the presence of a multiphase structure can be identified by the presence of at least two distinct glass transition temperatures.

The first heterophasic propylene copolymer (HECO1) and the second heterophasic propylene copolymer (HECO2) as employed according to the present invention are described in further detail below.

**First heterophasic propylene copolymer (HECO1)**

As stated above, the polyolefin composition according to the present invention comprises a first heterophasic propylene copolymer (HECO1) as an essential component. It is preferred that the first heterophasic propylene copolymer (HECO1) before mixed with the other components mentioned herein comprises as polymer components only the matrix polypropylene (PP1) and dispersed therein the elastomeric propylene copolymer (E1). In other words the first heterophasic propylene copolymer (HECO1) may contain further additives but no other polymer in an amount exceeding 5 wt-%, more preferably exceeding 3 wt.-%, like exceeding 1 wt.-%, based on the total amount of the first heterophasic propylene copolymer (HECO1), more preferably based on the polymers present in the first heterophasic propylene copolymer (HECO1). One additional polymer which may be present in such low amounts is a polyethylene which is a reaction product obtained by the preparation of the first heterophasic propylene copolymer (HECO1). Accordingly it is in particular appreciated that a first heterophasic propylene copolymer (HECO1) as defined in the instant invention contains only a polypropylene (PP1), an elastomeric propylene copolymer (E1) and optionally a polyethylene in amounts as mentioned in this paragraph.

One important aspect of the instant invention is that the first heterophasic propylene copolymer (HECO1) has a rather high melt flow rate, i.e. has a melt flow rate $MFR_2$ (230 °C) of at least 15.0 g/10min, more preferably in the range of 40.0 to 65.0 g/10min, yet more preferably in the range of 42.0 to 60.0 g/10 min, still more preferably in the range of 44.0 to 58.0 g/10min, like in the range of 46.0 to 56.0 g/10min

Preferably the propylene content in the heterophasic propylene copolymer (HECO1) is 83.0 to 94.0 wt-%, more preferably 85.0 to 93.0 wt-%, like 88.0 to 92.0 wt.-%, based on the total amount of the first heterophasic propylene copolymer (HECO1), more preferably based on the amount of the polymer components of the first heterophasic propylene copolymer (HECO1), yet more preferably based on the amount of the polypropylene (PP1) and the elastomeric propylene copolymer (E1) together. The remaining part constitutes the comonomers as defined for the polypropylene (PP1) being a propylene copolymer (R-PP1) and the elastomeric propylene copolymer (E1), respectively, preferably ethylene. Accordingly the comonomer content, preferably ethylene content, of the first heterophasic propylene copolymer (HECO1) is in the range of 6.0 to 17.0 wt-%, more preferably in the range of 7.0 to 15.0 wt-%, like 8.0 to 12.0 wt.-%.

As stated above the matrix of the first heterophasic propylene copolymer (HECO1) is the polypropylene (PP1).

The polypropylene (PP1) according to this invention constituting the matrix of the first heterophasic copolymer (HECO1) shall have a melt flow rate $MFR_2$ (230 °C) of 60 to 400 g/10min, preferably in the range of 100 to 350 g/10min, more preferably in the range of 150 to 300 g/10min According to the present invention the xylene cold insoluble (XCI) fraction of the first heterophasic propylene copolymer (HECO1) is regarded as the matrix, i.e. as the polypropylene (PP1), of the first heterophasic propylene copolymer (HECO1). This is especially applicable for the melt flow rate $MFR_2$ (230 °C) and/or the comonomer content of the polypropylene (PP1) of the first heterophasic copolymer (HECO1).

The polypropylene (PP1) can be a propylene copolymer (R-PP1) or a propylene homopolymer (H-PP1), the latter is preferred.

Accordingly it is appreciated that the polypropylene (PP1) has a comonomer content equal or below 9.0 wt-%, more preferably equal or below 7.0 wt-%, still more preferably equal or below 4.0 wt-%.

The expression propylene homopolymer, e.g. the expressions propylene homopolymer (H-PP1) and propylene homopolymer (H-PP2), used in the instant invention relates to a polypropylene that consists substantially, i.e. of more than 99.0 wt-%, such as at least 99.5 wt-%, still more preferably of at least 99.7 wt-%, like of at least 99.8 wt-%, of propylene units. In case other monomeric units are present in minor amounts, the units are selected from ethylene and/or a $C_4$ to $C_{12}$ $\alpha$-olefin as described below. In a preferred embodiment only propylene units in the propylene homopolymer ((H-PP1) or (H-PP2)) are detectable.

In case the polypropylene (PP1) is a propylene copolymer (R-PP1) it comprises monomers copolymerizable with propylene, for example comonomers such as ethylene and/or $C_4$ to $C_{12}$ $\alpha$-olefins, in particular ethylene and/or $C_4$ to $C_{10}$ $\alpha$-olefins, e.g. 1-butene and/or 1-hexene. Preferably the propylene copolymer (R-PP1) comprises, especially consists of, monomers copolymerizable with propylene from the group consisting of ethylene, 1-butene and 1-hexene. More specifically the propylene copolymer (R-PP1) comprises - apart from propylene - units derivable from ethylene and/or 1-butene. In a preferred embodiment the propylene copolymer (R-PP1) comprises units derivable from ethylene and propylene only. The comonomer content in the propylene copolymer (R-PP1) is preferably in the range of more than 1.0 to 9.0 wt-%, still more preferably in the range of more than 1.0 to 7.0 wt-%.

The polypropylene (PP1) can have a xylene cold soluble content (XCS) in a broad range, i.e. up to 5.0 wt.-%. Accordingly the polypropylene (PP1) may have a xylene cold soluble content (XCS) in the range of 0.3 to 5.0 wt.-%, preferably in the range of 0.5 to 4.5 wt.-%, like in the range of 1.0 to 4.0 wt.-%.

However in preferred embodiments the polypropylene (PP1), in particular in case the polypropylene (PP1) is a propylene homopolymer (H-PP1), has a xylene cold soluble (XCS) content in the range of 0.5 to 5.0 wt.-%, more preferably in the range of 1.0 to 4.0 wt.-%, still more preferably of 1.5 to 3.5 wt.-%.

One further essential component of the first heterophasic propylene copolymer (HECO1) is its elastomeric propylene copolymer (E1).

The elastomeric propylene copolymer (E1) preferably comprises monomers copolymerizable with propylene, for example comonomers such as ethylene and/or $C_4$ to $C_{12}$ $\alpha$-olefins, in particular ethylene and/or $C_4$ to $C_{10}$ $\alpha$-olefins, e.g. 1-butene and/or 1-hexene. Preferably the elastomeric propylene copolymer (E1) comprises, especially consists of, monomers copolymerizable with propylene from the group consisting of ethylene, 1-butene and 1-hexene. More specifically the elastomeric propylene copolymer (E1) comprises -apart from propylene - units derivable from ethylene and/or 1-butene. Thus in an especially preferred embodiment the elastomeric propylene copolymer phase (E1) comprises units derivable from ethylene and propylene only.

In case the polypropylene (PP1) is a propylene copolymer (R-PP1) it is preferred that the comonomer(s) of the propylene copolymer (R-PP1) and the elastomeric propylene copolymer (E1) are the same.

The properties of the elastomeric propylene copolymer phase (E1) mainly influence the xylene cold soluble (XCS) content of the first heterophasic propylene copolymer (HECO1). Thus according to the present invention the xylene cold soluble (XCS) fraction of the first heterophasic propylene copolymer (HECO1) is regarded as the elastomeric propylene copolymer (E1) of the first heterophasic propylene copolymer (HECO1).

Accordingly, the amount of the elastomeric propylene copolymer (E1), i.e. of the xylene cold soluble (XCS) fraction, of the first heterophasic propylene copolymer (HECO1) preferably is at least 15 wt.-%, like at least 18 wt.-%, more preferably is in the range of 15 to 30 wt.-%, still more preferably in the range of 18 to 28 wt.-%, yet more preferably in the range of 19 to 25 wt.-%. These values are based on the first heterophasic propylene copolymer (HECO1) and not on the total polyolefin composition.

One important requirement of the present invention is that the elastomeric propylene copolymer (E1) has a balanced weight average molecular weight. Small particles are formed in case the matrix and the elastomeric phase have similar molecular weight. Small particles are generally preferred, because this improves the overall properties of the heterophasic system. However, in the instant invention the matrix of the first heterophasic propylene copolymer (HECO1) has by trend a high melt flow rate and thus a rather low weight average molecular weight. Accordingly also the elastomeric propylene copolymer (E1) should have a low weight average molecular weight in order to obtain small particles. On the other hand this would mean in the present case a severe reduction in low weight average molecular weight for the elastomeric propylene copolymer (E1), which has negative impact on the mechanical properties. Accordingly the intrinsic viscosity must be carefully chosen.

Low intrinsic viscosity (IV) values reflect a low weight average molecular weight. Thus it is appreciated that the elastomeric propylene copolymer phase (E1), i.e. the xylene cold soluble fraction (XCS) of the first heterophasic propylene copolymer (HECO1), has an intrinsic viscosity (IV) determined according to DIN ISO 1628/1 (in decaline at 135 °C) in the range of 2.5 to 4.3 dl/g, more preferably in the range of equal or more than 2.5 to 4.0 dl/g, still more preferably in the range of equal or more than 2.5 to 3.8 dl/g, like in the range of 2.5 to 3.5 dl/g.

The comonomer content, preferably the ethylene content, within the elastomeric propylene copolymer phase (E1) shall be preferably also in a specific range. Accordingly in a preferred embodiment the comonomer content, more preferably ethylene content, of the elastomeric propylene copolymer (E1), i.e. of the xylene cold soluble fraction (XCS) of the first heterophasic propylene copolymer (HECO1), is at least 30 wt.-%, like in the range of 30 to 50 wt-%, still more preferably at least 32 wt.-%, like in the range of 32 to 48 wt-%, yet more preferably in the range of 39 to 45 wt-% Accordingly it is appreciated that the propylene content of the elastomeric propylene copolymer (E1), i.e. of the xylene cold soluble fraction (XCS) of the first heterophasic propylene copolymer (HECO1), is preferably in the range of 50 to 70 wt -%, still more preferably in the range of 52 to 68 wt-%, yet more preferably in the range of 55 to 61 wt-%.

The first heterophasic propylene copolymer (HECO1) as defined in the instant invention may contain up to 5.0 wt.-% additives (excluding nucleating agents, e.g. excluding $\alpha$-nucleating agents), like antioxidants and slip agents as well as antiblocking agents. Preferably the additive content (without ($\alpha$-)nucleating agents) is below 3.0 wt.-%, like below 1.0 wt.-%.

Preferably the first heterophasic propylene copolymer (HECO1) comprises an $\alpha$-nucleating agent. Even more preferred the present invention is free of $\beta$-nucleating agents. Accordingly, the $\alpha$-nucleating agent is preferably selected from the group consisting of

(i) talc, and
(ii) salts of monocarboxylic acids and polycarboxylic acids, e.g. sodium benzoate or aluminum tert-butylbenzoate, and
(iii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and
(iv) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(v) vinylcycloalkane polymer and vinylalkane polymer (as discussed in more detail below), and
(vi) mixtures thereof.

Such additives are generally commercially available and are described, for example, in "Plastic Additives Handbook", 6th edition, 20081 of Hans Zweifel, pages 976 to 982.

Preferably the first heterophasic propylene copolymer (HECO1) contains up to 5 wt.-%, more preferably up to 2.0 wt.-%, of the $\alpha$-nucleating agent.

In a preferred embodiment, the first heterophasic propylene copolymer (HECO1) contains not more than 200 ppm, more preferably of 1 to 200 ppm, more preferably of 5 to 100 ppm of a $\alpha$-nucleatingagent, in particular selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, vinylcycloalkane polymer, vinylalkane polymer, and mixtures thereof.

In another preferred embodiment the first heterophasic propylene copolymer (HECO1) contains up to 5 wt.-%, more preferably contains up to 2.0 wt.-%, still more preferably 0.2 to 1.5 wt.-%, like 0.5 to 1.2 wt.-%, of talc.

It is especially preferred the first heterophasic propylene copolymer (HECO1) contains a vinylcycloalkane, like vinylcyclohexane (VCH), polymer and/or vinylalkane polymer. In one specific embodiment the first heterophasic propylene copolymer (HECO1) contains a vinylcycloalkane, like vinylcyclohexane (VCH), polymer and/or vinylalkane polymer. Preferably the vinylcycloalkane is vinylcyclohexane (VCH) polymer is introduced into the first heterophasic propylene copolymer (HECO1) by the BNT technology.

More preferably in this preferred embodiment, the amount of vinylcycloalkane, like vinylcyclohexane (VCH), polymer and/or vinylalkane polymer, more preferably of vinylcyclohexane (VCH) polymer, in the first heterophasic propylene copolymer (HECO1) is not more than 500 ppm, more preferably of 1 to 200 ppm, most preferably 5 to 100 ppm.

With regard to the BNT-technology reference is made to the international applications WO 99/24478, WO 99/24479 and particularly WO 00/68315. According to this technology a catalyst system, preferably a Ziegler-Natta procatalyst, can be modified by polymerising a vinyl compound in the presence of the catalyst system, comprising in particular the special Ziegler-Natta procatalyst, an external donor and a cocatalyst, which vinyl compound has the formula:

$$CH_2=CH-CHR^3R^4$$

wherein $R^3$ and $R^4$ together form a 5- or 6-membered saturated, unsaturated or aromatic ring or independently represent an alkyl group comprising 1 to 4 carbon atoms, and the modified catalyst is used for the preparation of the propylene copolymer according to this invention. The polymerized vinyl compound acts as an $\alpha$-nucleating agent. The weight ratio of vinyl compound to solid catalyst component in the modification step of the catalyst is preferably of up to 5 (5:1), preferably up to 3 (3:1) most preferably from 0.5 (1:2) to 2 (2:1). The most preferred vinyl compound is vinylcyclohexane (VCH).

In one specific embodiment the first heterophasic propylene copolymer (HECO1) comprises

(a) up to 5 wt.-%, more preferably contains up to 2.0 wt.-%, still more preferably 0.2 to 1.5 wt.-%, like 0.5 to 1.2 wt.-%, based on the total amount of the first heterophasic propylene copolymer (HECO1), of talc;
and

(b) up to 500 ppm, preferably 1 to 200 ppm, more preferably 5 to 100 ppm, of vinylcycloalkane, like vinylcyclohexane (VCH), polymer and/or vinylalkane polymer, more preferably of vinylcyclohexane (VCH) polymer.

As will be explained below, the first heterophasic polypropylene (HECO1) as well its individual components (matrix and elastomeric copolymer) can be produced by blending different polymer types, i.e. of different molecular weight and/or comonomer content. However it is preferred that the first heterophasic polypropylene (HECO1) as well its individual components (matrix and elastomeric copolymer) are produced in a sequential step process, using reactors in serial configuration and operating at different reaction conditions. As a consequence, each fraction prepared in a specific reactor will have its own molecular weight distribution and/or comonomer content distribution.

The first heterophasic propylene copolymer (HECO1) according to this invention is preferably produced in a sequential polymerization process, i.e. in a multistage process, known in the art, wherein the polypropylene (PP1) is produced at least in one slurry reactor, preferably in a slurry reactor and optionally in a subsequent gas phase reactor, and subsequently the elastomeric propylene copolymer (E1) is produced at least in one, i.e. one or two, gas phase reactor(s).

Accordingly it is preferred that the first heterophasic propylene copolymer (HECO1) is produced in a sequential polymerization process comprising the steps of

(a) polymerizing propylene and optionally at least one ethylene and/or $C_4$ to $C_{12}$ $\alpha$-olefin in a first reactor (R1) obtaining the first polypropylene fraction of the polypropylene (PP1), preferably said first polypropylene fraction is a first propylene homopolymer,

(b) transferring the first polypropylene fraction into a second reactor (R2),

(c) polymerizing in the second reactor (R2) and in the presence of said first polypropylene fraction propylene and optionally at least one ethylene and/or $C_4$ to $C_{12}$ $\alpha$-olefin obtaining thereby the second polypropylene fraction, preferably said second polypropylene fraction is a second propylene homopolymer, said first polypropylene fraction and said second polypropylene fraction form the polypropylene (PP1), i.e. the matrix of the heterophasic propylene copolymer (HECO1),

(d) transferring the polypropylene (PP1) of step (c) into a third reactor (R3),

(e) polymerizing in the third reactor (R3) and in the presence of the polypropylene (PP1) obtained in step (c) propylene and at least one ethylene and/or $C_4$ to $C_{12}$ $\alpha$-olefin obtaining thereby a first elastomeric propylene copolymer fraction, the first elastomeric propylene copolymer fraction is dispersed in the polypropylene (PP1),

(f) transferring the polypropylene (PP1) in which the first elastomeric propylene copolymer fraction is dispersed in a

fourth reactor (R4), and

(g) polymerizing in the fourth reactor (R4) and in the presence of the mixture obtained in step (e) propylene and at least one ethylene and/or $C_4$ to $C_{12}$ $\alpha$-olefin obtaining thereby the second elastomeric propylene copolymer fraction, the polypropylene (PP1), the first elastomeric propylene copolymer fraction, and the second elastomeric propylene copolymer fraction form the heterophasic propylene copolymer (HECO1).

Of course, in the first reactor (R1) the second polypropylene fraction can be produced and in the second reactor (R2) the first polypropylene fraction can be obtained. The same holds true for the elastomeric propylene copolymer phase. Accordingly in the third reactor (R3) the second elastomeric propylene copolymer fraction can be produced whereas in the fourth reactor (R4) the first elastomeric propylene copolymer fraction is made.

Preferably between the second reactor (R2) and the third reactor (R3) and optionally between the third reactor (R3) and fourth reactor (R4) the monomers are flashed out.

The term "sequential polymerization process" indicates that the first heterophasic propylene copolymer (HECO1) is produced in at least two, like three or four reactors connected in series. Accordingly the present process comprises at least a first reactor (R1) and a second reactor (R2), more preferably a first reactor (R1), a second reactor (R2), a third reactor (R3) and a fourth reactor (R4). The term "polymerization reactor" shall indicate that the main polymerization takes place. Thus in case the process consists of four polymerization reactors, this definition does not exclude the option that the overall process comprises for instance a pre-polymerization step in a pre-polymerization reactor. The term "consist of" is only a closing formulation in view of the main polymerization reactors.

The first reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

The second reactor (R2) can be a slurry reactor, like a loop reactor, as the first reactor or alternatively a gas phase reactor (GPR).

The third reactor (R3) and the fourth reactor (R4) are preferably gas phase reactors (GPR).

Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor (R1) is a slurry reactor (SR), like a loop reactor (LR), whereas the second reactor (R2), the third reactor (R3) and the fourth reactor (R4) are gas phase reactors (GPR). Accordingly for the instant process at least four, preferably four polymerization reactors, namely a slurry reactor (SR), like a loop reactor (LR), a first gas phase reactor (GPR-1), a second gas phase reactor (GPR-2) and a third gas phase reactor (GPR-3) connected in series are used. If needed prior to the slurry reactor (SR) a pre-polymerization reactor is placed.

In another preferred embodiment the first reactor (R1) and second reactor (R2) are slurry reactors (SR), like a loop reactors (LR), whereas the third reactor (R3) and the fourth reactor (R4) are gas phase reactors (GPR). Accordingly for the instant process at least four, preferably four polymerization reactors, namely two slurry reactors (SR), like two loop reactors (LR), first gas phase reactor (GPR-1) and a second gas phase reactor (GPR-2) connected in series are used. If needed prior to the first slurry reactor (SR) a pre-polymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, in the instant process for producing the heterophasic propylene copolymer (HECO) as defined above the conditions for the first reactor (R1), i.e. the slurry reactor (SR), like a loop reactor (LR), of step (a) may be as follows:

- the temperature is within the range of 50 °C to 110 °C, preferably between 60 °C and 100 °C, more preferably between 68 and 95 °C,
- the pressure is within the range of 20 bar to 80 bar, preferably between 40 bar to 70 bar,
- hydrogen can be added for controlling the molar mass in a manner known per se.

Subsequently, the reaction mixture from step (a) is transferred to the second reactor (R2), i.e. gas phase reactor (GPR-1), i.e. to step (c), whereby the conditions in step (c) are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The condition in the third reactor (R3) and the fourth reactor (R4), preferably in the second gas phase reactor (GPR-2) and third gas phase reactor (GPR-3), is similar to the second reactor (R2).

The residence time can vary in the three reactor zones.

In one embodiment of the process for producing the polypropylene the residence time in bulk reactor, e.g. loop is in the range 0.1 to 2.5 hours, e.g. 0.15 to 1.5 hours and the residence time in gas phase reactor will generally be 0.2 to 6.0 hours, like 0.5 to 4.0 hours.

If desired, the polymerization may be effected in a known manner under supercritical conditions in the first reactor (R1), i.e. in the slurry reactor (SR), like in the loop reactor (LR), and/or as a condensed mode in the gas phase reactors (GPR).

Preferably the process comprises also a prepolymerization with the catalyst system, as described in detail below, comprising a Ziegler-Natta procatalyst, an external donor and optionally a cocatalyst.

In a preferred embodiment, the prepolymerization is conducted as bulk slurry polymerization in liquid propylene, i.e. the liquid phase mainly comprises propylene, with minor amount of other reactants and optionally inert components dissolved therein.

The prepolymerization reaction is typically conducted at a temperature of 10 to 60 °C, preferably from 15 to 50 °C, and more preferably from 20 to 45 °C.

The pressure in the prepolymerization reactor is not critical but must be sufficiently high to maintain the reaction mixture in liquid phase. Thus, the pressure may be from 20 to 100 bar, for example 30 to 70 bar.

The catalyst components are preferably all introduced to the prepolymerization step. However, where the solid catalyst component (i) and the cocatalyst (ii) can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

According to the invention the first heterophasic propylene copolymer (HECO1) is obtained by a multistage polymerization process, as described above, in the presence of a catalyst system comprising as component (i) a Ziegler-Natta procatalyst which contains a transesterification product of a lower alcohol and a phthalic ester.

The procatalyst used according to the invention for preparing the first heterophasic propylene copolymer (HECO1) is prepared by

a) reacting a spray crystallized or emulsion solidified adduct of $MgCl_2$ and a $C_1$-$C_2$ alcohol with $TiCl_4$
b) reacting the product of stage a) with a dialkylphthalate of formula (I)

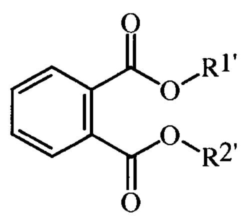

(I)

wherein $R^{1'}$ and $R^{2'}$ are independently at least a $C_5$ alkyl
under conditions where a transesterification between said $C_1$ to $C_2$ alcohol and said dialkylphthalate of formula (I) takes place to form the internal donor
c) washing the product of stage b) or
d) optionally reacting the product of step c) with additional $TiCl_4$.

The procatalyst is produced as defined for example in the patent applications WO 87/07620, WO 92/19653, WO 92/19658 and EP 0 491 566. The content of these documents is herein included by reference.

First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol.

The adduct, which is first melted and then spray crystallized or emulsion solidified, is used as catalyst carrier.

In the next step the spray crystallized or emulsion solidified adduct of the formula $MgCl_2$*nROH, wherein R is methyl or ethyl, preferably ethyl and n is 1 to 6, is contacting with $TiCl_4$ to form a titanized carrier, followed by the steps of

- adding to said titanised carrier

  (i) a dialkylphthalate of formula (I) with $R^{1'}$ and $R^{2'}$ being independently at least a $C_5$-alkyl, like at least a $C_8$-alkyl, or preferably
  (ii) a dialkylphthalate of formula (I) with $R^{1'}$ and $R^{2'}$ being the same and being at least a $C_5$-alkyl, like at least a $C_8$-alkyl,
  or more preferably
  (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,
  to form a first product,

- subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

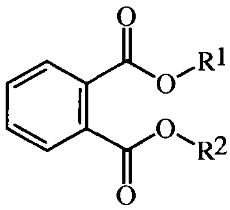 (II)

  with $R^1$ and $R^2$ being methyl or ethyl, preferably ethyl,
  the dialkylphthalat of formula (II) being the internal donor and
- recovering said transesterification product as the procatalyst composition (component (i)).

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the present invention as described in WO 92/19658 and WO 92/19653. As the catalyst residue is removed by extracting, an adduct of the titanised carrier and the internal donor is obtained, in which the group deriving from the ester alcohol has changed.

In case sufficient titanium remains on the carrier, it will act as an active element of the procatalyst.

Otherwise the titanization is repeated after the above treatment in order to ensure a sufficient titanium concentration and thus activity.

Preferably the procatalyst used according to the invention contains 2.5 wt.-% of titanium at the most, preferably 2.2% wt.-% at the most and more preferably 2.0 wt.-% at the most. Its donor content is preferably between 4 to 12 wt.-% and more preferably between 6 and 10 wt.-%.

More preferably the procatalyst used according to the invention has been produced by using ethanol as the alcohol and dioctylphthalate (DOP) as dialkylphthalate of formula (I), yielding diethyl phthalate (DEP) as the internal donor compound.

Still more preferably the catalyst used according to the invention is the catalyst as described in the example section; especially with the use of dioctylphthalate as dialkylphthalate of formula (I).

For the production of the heterophasic propylene copolymer (HECO1) according to the invention the catalyst system used preferably comprises in addition to the special Ziegler-Natta procatalyst an organometallic cocatalyst as component (ii).

Accordingly it is preferred to select the cocatalyst from the group consisting of trialkylaluminium, like triethylaluminium (TEA), dialkyl aluminium chloride and alkyl aluminium sesquichloride.

Component (iii) of the catalysts system used is an external donor represented by formula (IIIa) or (IIIb). Formula (IIIa) is defined by

$$Si(OCH_3)_2R_2^5 \qquad (IIIa)$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^5$ is selected from the group consisting of iso-propyl, iso-butyl, iso-pentyl, tert.-butyl, tert.-amyl, neopentyl, cyclopentyl, cyclohexyl, methylcyclopentyl and cycloheptyl.

Formula (IIIb) is defined by

$$Si(OCH_2CH_3)_3(NR^xR^y) \qquad (IIIb)$$

wherein $R^x$ and $R^y$ can be the same or different a represent a hydrocarbon group having 1 to 12 carbon atoms.

$R^x$ and $R^y$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^x$ and $R^y$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^x$ and $R^y$ are the same, yet more preferably both $R^x$ and $R^y$ are an ethyl group.

More preferably the external donor is of formula (IIIa), like dicyclopentyl dimethoxy silane $[Si(OCH_3)_2(cyclopentyl)_2]$ or diisopropyl dimethoxy silane $[Si(OCH_3)_2(CH(CH_3)_2)_2]$.

Most preferably the external donor of formula (IIIb) is diethylaminotriethoxysilane.

In a further embodiment, the Ziegler-Natta procatalyst can be modified by polymerising a vinyl compound in the presence of the catalyst system, comprising the special Ziegler-Natta procatalyst (component (i)), an external donor (component (iii) and optionally a cocatalyst (component (iii)), which vinyl compound has the formula:

$$CH_2=CH-CHR^3R^4$$

wherein $R^3$ and $R^4$ together form a 5- or 6-membered saturated, unsaturated or aromatic ring or independently represent an alkyl group comprising 1 to 4 carbon atoms, and the modified catalyst is used for the preparation of the heterophasic propylene copolymer according to this invention. The polymerized vinyl compound can act as an $\alpha$-nucleating agent.

Concerning the modification of catalyst reference is made to the international applications WO 99/24478, WO 99/24479 and particularly WO 00/68315, incorporated herein by reference with respect to the reaction conditions concerning the modification of the catalyst as well as with respect to the polymerization reaction.

**Second heterophasic propylene copolymer (HECO2)**

As mentioned above, the polyolefin composition according to the present invention further comprises a second heterophasic propylene copolymer (HECO2) as an essential component.

The second heterophasic propylene copolymer (HECO2) typically has a lower melt flow rate $MFR_2$ than the first heterophasic propylene copolymer (HECO1). Furthermore, the intrinsic viscosity (IV) of the xylene cold soluble (XCS) fraction of the second heterophasic propylene copolymer (HECO2) should be significantly higher than in the first heterophasic propylene copolymer (HECO1).

Accordingly it is preferred that the ratio of the melt flow rate $MFR_2$ (230 °C) of the first heterophasic propylene copolymer (HECO1) to the second heterophasic propylene copolymer (HECO2) fulfills the in-equation (I), more preferably in-equation (Ia), still more preferably in-equation (Ib), yet more preferably in-equation (Ic)

$$\frac{MFR\ (1)}{MFR\ (2)} \geq 1.5 \quad (I),$$

$$1.5 \leq \frac{MFR\ (1)}{MFR\ (2)} \leq 25 \quad (Ia),$$

$$5.0 \leq \frac{MFR\ (1)}{MFR\ (2)} \leq 20 \quad (Ib),$$

$$8.0 \leq \frac{MFR\,(1)}{MFR\,(2)} \leq 15 \qquad \text{(Ic)},$$

wherein

MFR (1) is the melt flow rate $MFR_2$ (230 °C) of the first heterophasic propylene copolymer (HECO1) and
MFR (2) is the melt flow rate $MFR_2$ (230 °C) of the second heterophasic propylene copolymer (HECO2).

In one further embodiment it is preferred that the ratio of the intrinsic viscosity (IV) of the cold xylene soluble content (XCS) of the second heterophasic propylene copolymer (HECO2) to the intrinsic viscosity (IV) of the cold xylene soluble content (XCS) of the first heterophasic propylene copolymer (HECO1) fulfills the in-equation (II), more preferably inequation (IIa), still more preferably in-equation (IIb), yet more preferably in-equation (IIc)

$$\frac{IV\,(2)}{IV(1)} \geq 1.1 \qquad \text{(II)},$$

$$1.1 \leq \frac{IV\,(2)}{IV(1)} \leq 4.0 \qquad \text{(IIa)},$$

$$1.2 < \frac{IV\,(2)}{IV(1)} \leq 3.2 \qquad \text{(IIb)},$$

$$1.3 \leq \frac{IV\,(2)}{IV(1)} \leq 2.8 \qquad \text{(IIc)},$$

wherein

IV (1) is the intrinsic viscosity (IV) of the cold xylene soluble content (XCS) of the first heterophasic propylene copolymer (HECO1) and
IV (2) is the intrinsic viscosity (IV) of the cold xylene soluble content (XCS) of the second heterophasic propylene copolymer (HECO2).

The second heterophasic propylene copolymer (HECO2) of the present invention is a heterophasic system with balanced comonomer / intrinsic viscosity ratio in the xylene cold soluble (XCS) fraction of the same.

Accordingly the second heterophasic polypropylene composition (HECO2) of the present invention comprises a propylene homopolymer (H-PP2) and an elastomeric propylene copolymer (E2), wherein

(i) said second heterophasic propylene copolymer (HECO2) has a melt flow rate $MFR_2$ (230°C) measured according to ISO 1133 in the range of above 1.0 to 8.0 g/10min;
(ii) the xylene cold soluble (XCS) fraction of the second heterophasic propylene copolymer (HECO2) has an intrinsic viscosity determined according to DIN ISO 1628/1 (in decalin at 135 °C) in the range of more than 3.7 to 9.0 dUg; and
(iii) the comonomer content of the xylene cold soluble (XCS) fraction of the second heterophasic propylene copolymer (HECO2) is in the range of 10.0 to 40.0 wt.-%,

Preferably the propylene homopolymer (H-PP2) of the second heterophasic propylene copolymer (HECO2) has a melt flow rate $MFR_2$ (230°C) measured according to ISO 1133 in the range of above 15 to 400 g/10min

Preferably the second heterophasic propylene copolymer (HECO2) has a xylene cold soluble content (XCS) determined according ISO 16152 (25 °C) of below 40 wt.-%, preferably below 35 wt.-%, more preferably in the range of 8.0 to 35 wt.-%, yet more preferably in the range of 15 to 35 wt.-%, like in the range of 20 to 35 wt.-%.

In one preferred embodiment the second heterophasic propylene copolymer (HECO2) fulfills the in-equation (III)

$$0.50 \geq \left(0.241 \times \frac{C}{wt.-\%}\right) - \left(1.14 \times \frac{IV}{dl/g}\right) \qquad \text{(III)}$$

wherein

C is the comonomer content in wt.-% of the xylene cold soluble (XCS) fraction of the second heterophasic propylene copolymer (HECO2), and
IV is the intrinsic viscosity in dl/g of the xylene cold soluble (XCS) fraction of the second heterophasic propylene copolymer (HECO2).

Preferably the second heterophasic propylene copolymer (HECO2) as defined above has a melt flow rate $MFR_2$ (230°C) measured according to ISO 1133 in the range of 1.0 to 8.0 g/10min, preferably in the range of 1.0 to 7.0 g/10min, more preferably in the range of 2.0 to 6.0 g/10min, like in the range of 2.5 to 6.0 g/10min

The second heterophasic propylene copolymer (HECO2) comprises a matrix (M2) being a propylene homopolymer (H-PP2) and dispersed therein the elastomeric propylene copolymer (E2). Thus the matrix (M2) contains (finely) dispersed inclusions being not part of the matrix (M2) and said inclusions contain the elastomeric propylene copolymer (E2). Concerning further definition of the term "heterophasic propylene copolymer" it is referred to the information provided above.

As mentioned above, the second heterophasic propylene copolymer (HECO2) comprises a propylene homopolymer (H-PP2). Said propylene homopolymer (H-PP2) constitutes the matrix (M2) of the second heterophasic propylene copolymer (HECO2).

As the propylene homopolymer (H-PP2) is nearly xylene cold insoluble and the elastomeric propylene copolymer (E2) is predominantly soluble in cold xylene, the properties of xylene cold insoluble fraction (XCI) of the second heterophasic propylene copolymer (HECO2) and of the propylene homopolymer (H-PP2) are quite similar.

Accordingly, the xylene cold insoluble (XCI) fraction of the second heterophasic propylene copolymer (HECO2) and the propylene homopolymer (H-PP2) have a melt flow rate $MFR_2$ (230°C) measured according to ISO 1133 in the range of 15 to 400 g/10min, preferably in the range 20 to 300 g/10min, more preferably in the range of 30 to 120 g/10min, yet more preferably in the range of 45 to 95 g/10min

The propylene homopolymer (H-PP2) can be monomodal or multimodal, like bimodal, in its molecular weight fraction.

In case the propylene homopolymer (H-PP2) is multimodal, like bimodal, in its molecular weight, it comprises at least two fractions, preferably consist of two fractions, the fractions are a first propylene homopolymer fraction (H-PP2a) and a second propylene homopolymer fraction (H-PP2b). Preferably the two fractions differ in the melt flow rate $MFR_2$ (230°C). Accordingly it is appreciated that the first propylene homopolymer fraction (H-PP2a) differs by a melt flow rate $MFR_2$ (230°C) of at least 10 g/10min, more preferably by at least 20 g/10min, still more preferably in a range from 10 to 200 g/10min, yet more preferably in a range from 20 to 150 g/10min, from the second propylene homopolymer fraction (H-PP2b). Preferably the melt flow rate $MFR_2$ (230°C) of the first propylene homopolymer fraction (H-PP2a) is higher than the melt flow rate $MFR_2$ (230°C) of the second propylene homopolymer fraction (H-PP2b).

The elastomeric propylene copolymer (E2) of the second heterophasic propylene copolymer (HECO2) mainly influences the properties and amount of the xylene cold soluble (XCS) fraction of the second heterophasic propylene copolymer (HECO2). Accordingly in a first approximation the properties of the elastomeric propylene copolymer (E2) can be equated with the properties of the xylene cold soluble (XCS) fraction of the second heterophasic propylene copolymer (HECO2). However in preferred embodiments the amount of elastomeric propylene copolymer (E2) is higher than the total xylene cold soluble (XCS) content of the second heterophasic propylene copolymer (HECO2).

Accordingly the amount of elastomeric copolymer (E2) of the second heterophasic propylene copolymer (HECO2) preferably is below 40.0 wt.-%, more preferably equal or below 38.0 wt.-%, still more preferably in the range of 15.0 to 40 wt.-%, yet more preferably in the range of 17.0 to below 38 wt.-%.

On the other hand, the amount of the xylene cold soluble (XCS) fraction of the second heterophasic propylene copolymer (HECO2) preferably is below 40.0 wt.-%, more preferably equal or below 35.0 wt.-%, still more preferably in the range of 8.0 to 35.0 wt.-%, yet more preferably in the range of 15.0 to 35.0 wt.-%, like in the range of 20.0 to 35.0 wt.-%.

The elastomeric propylene copolymer (E2) comprises monomers copolymerizable with propylene, for example comonomers such as ethylene and/or $C_4$ to $C_{12}$ $\alpha$-olefins, in particular ethylene and/or $C_4$ to $C_{12}$ $\alpha$-olefins, e.g. 1-butene and/or 1-hexene. Preferably the elastomeric propylene copolymer (E2) comprises, especially consists of, monomers copolymerizable with propylene from the group consisting of ethylene, 1-butene and 1-hexene. More specifically the elastomeric propylene copolymer (E2) comprises - apart from propylene - units derivable from ethylene and/or 1-butene. Thus in an especially preferred embodiment the elastomeric propylene copolymer phase (E2) comprises units derivable from ethylene and propylene only, i.e. is a propylene-ethylene rubber (EPR).

The comonomer content, preferably the ethylene content, of the elastomeric propylene copolymer (E2) based on the total weight of the elastomeric propylene copolymer (E2) preferably is not more than 40.0 wt-%, still more preferably not more than 35.0 wt-%, yet more preferably in the range of 10.0 to 40.0 wt%, still yet more preferably in the range of 12.0 to 35.0 wt-%, even yet more preferably in the range of 14.0 to 30.0 wt-%.

In turn it is preferred that the comonomer content, preferably the ethylene content, of the xylene cold soluble (XCS) fraction of the second heterophasic propylene copolymer (HECO2) is not more than 40.0 wt-%, still more preferably not more than 35.0 wt-%, yet more preferably in the range of 10.0 to 40.0 wt-%, still yet more preferably in the range of 12.0 to 30.0 wt-%, even yet more preferably in the range of 13.0 to 29.0 wt-%, like in the range of 14.0 to 27.0 wt-%.

Additionally it is required that the molecular weight of the xylene cold soluble (XCS) fraction of the second heterophasic propylene copolymer (HECO2) is in a specific range. Accordingly it is appreciated that the xylene cold soluble (XCS) fraction of the second heterophasic propylene copolymer (HECO2) has an intrinsic viscosity (IV) determined according to DIN ISO 1628/1 (in decalin at 135 °C) in the range of more than 3.7 to 9.0 dUg, more preferably in the range of 4.0 to 8.5 dl/g, still more preferably in the range of 4.2 to 8.0 dl/g, like in the range of 4.5 to 7.0 dUg.

An essential aspect of the present invention is that the intrinsic viscosity (IV) and the comonomer content, preferably the ethylene content, of the xylene cold soluble fraction of the second heterophasic propylene copolymer (HECO2) are aligned to each other. Accordingly it is required that the second heterophasic propylene copolymer (HECO2) fulfills the inequation (III), preferably inequation (IIIa), more preferably inequation (IIIb), still more preferably inequation (IIIc),

$$0.50 \geq \left(0.241 \times \frac{C}{wt.-\%}\right) - \left(1.14 \times \frac{IV}{dl/g}\right) \qquad \text{(III)}$$

$$0.00 \geq \left(0.241 \times \frac{C}{wt.-\%}\right) - \left(1.14 \times \frac{IV}{\frac{dl}{g}}\right) \geq -5.00 \qquad \text{(IIIa)}$$

$$-0.50 \geq \left(0.241 \times \frac{C}{wt.-\%}\right) - \left(1.14 \times \frac{IV}{\frac{dl}{g}}\right) \geq -4.00 \qquad \text{(IIIb)}$$

$$-1.00 \geq \left(0.241 \times \frac{C}{wt.-\%}\right) - \left(1.14 \times \frac{IV}{\frac{dl}{g}}\right) \geq -3.50 \qquad \text{(IIIc)}$$

wherein

C is the comonomer content in wt.-% of the xylene cold soluble (XCS) fraction of the second heterophasic propylene copolymer (HECO2), and

IV is the intrinsic viscosity in dl/g of the xylene cold soluble (XCS) fraction of the second heterophasic propylene copolymer (HECO2).

As can be taken from the above inequations, the values of the comonomer content and the intrinsic viscosity are used dimensionless as they are divided by the respective unit, i.e. by "wt.-%" and "dl/g", respectively.

As mentioned above the second heterophasic propylene copolymer (HECO2) comprises the propylene homopolymer (H-PP2) and the elastomeric propylene copolymer (E2). Accordingly the comonomers of the second heterophasic propylene copolymer (HECO2) are preferably the same as for the elastomeric propylene copolymer (E2). Thus, the second heterophasic propylene copolymer (HECO2) comprises apart from propylene comonomers such as ethylene and/or $C_4$ to $C_{12}$ $\alpha$-olefins, in particular ethylene and/or $C_4$ to $C_{10}$ $\alpha$-olefins, e.g. 1-butene and/or 1-hexene. Preferably the second heterophasic propylene copolymer (HECO2) comprises, especially consists of, monomers copolymerizable with propylene from the group consisting of ethylene, 1-butene and 1-hexene. More specifically the second heterophasic propylene copolymer (HECO2) comprises - apart from propylene - units derivable from ethylene and/or 1-butene. Thus in an especially preferred embodiment the second heterophasic propylene copolymer (HECO2) comprises units derivable from ethylene and propylene only.

The comonomer content, preferably the ethylene content, of the second heterophasic propylene copolymer (HECO2) preferably is below 20.0 wt-%, more preferably not more than 16.0 wt-%, still more preferably in the range of

3.5 to 16.0 wt-%, yet more preferably in the range of more than 4.0 to 14.0 wt-%.

Preferably it is desired that the second heterophasic propylene copolymer (HECO2) is thermo mechanically stable. Accordingly it is appreciated that the second heterophasic propylene copolymer (HECO2) has a melting temperature ($T_m$) of at least 135 °C, more preferably in the range of 135 to 168 °C.

The second heterophasic propylene copolymer (HECO2) as defined in the instant invention may contain up to 5.0 wt.-% additives (excluding nucleating agents, e.g. excluding $\alpha$-nucleating agents), like antioxidants and slip agents as well as antiblocking agents. Preferably the additive content (without ($\alpha$-)nucleating agents) is below 3.0 wt.-%, like below 1.0 wt.-%.

Preferably the second heterophasic propylene copolymer (HECO2) comprises an $\alpha$-nucleating agent. Even more preferred the present invention is free of $\beta$-nucleating agents. Accordingly, the $\alpha$-nucleatingagent is preferably selected from the group consisting of

(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer (as discussed in more detail below), and
(v) mixtures thereof.

Such additives are generally commercially available and are described, for example, in "Plastic Additives Handbook", 6th edition, 20081 of Hans Zweifel, pages 976 to 982.

Preferably the second heterophasic propylene copolymer (HECO2) contains up to 5 wt.-% of the $\alpha$-nucleating agent. In a preferred embodiment, the second heterophasic propylene copolymer (HECO2) contains not more than 200 ppm, more preferably of 1 to 200 ppm, more preferably of 5 to 100 ppm of a $\alpha$-nucleating agent, in particular selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, vinylcycloalkane polymer, vinylalkane polymer, and mixtures thereof.

It is especially preferred the second heterophasic propylene copolymer (HECO2) contains a vinylcycloalkane, like vinylcyclohexane (VCH), polymer and/or vinylalkane polymer. In one specific embodiment the second heterophasic propylene copolymer (HECO2) contains a vinylcycloalkane, like vinylcyclohexane (VCH), polymer and/or vinylalkane polymer. Preferably the vinylcycloalkane is vinylcyclohexane (VCH) polymer is introduced into the second heterophasic propylene copolymer (HECO2) by the BNT technology.

More preferably in this preferred embodiment, the amount of vinylcycloalkane, like vinylcyclohexane (VCH), polymer and/or vinylalkane polymer, more preferably of vinylcyclohexane (VCH) polymer, in the second heterophasic propylene copolymer (HECO2) is not more than 500 ppm, more preferably of 1 to 200 ppm, most preferably 5 to 100 ppm.

With regard to the BNT-technology reference is made to the international applications WO 99/24478, WO 99/24479 and particularly WO 00/68315. According to this technology a catalyst system, preferably a Ziegler-Natta procatalyst, can be modified by polymerising a vinyl compound in the presence of the catalyst system, comprising in particular the special Ziegler-Natta procatalyst, an external donor and a cocatalyst, which vinyl compound has the formula:

$$CH_2=CH-CHR^3R^4$$

wherein $R^3$ and $R^4$ together form a 5- or 6-membered saturated, unsaturated or aromatic ring or independently represent an alkyl group comprising 1 to 4 carbon atoms, and the modified catalyst is used for the preparation of the propylene copolymer according to this invention. The polymerized vinyl compound acts as an $\alpha$-nucleating agent. The weight ratio of vinyl compound to solid catalyst component in the modification step of the catalyst is preferably of up to 5 (5:1), preferably up to 3 (3:1) most preferably from 0.5 (1:2) to 2 (2:1). The most preferred vinyl compound is vinylcyclohexane (VCH).

The second heterophasic propylene copolymer (HECO2) is preferably obtained by a specific process. Accordingly the second heterophasic propylene copolymer (HECO2) is preferably obtained by a sequential polymerization process in the first reactor ($1^{st}$ R') and optionally in a second reactor ($2^{nd}$ R') the propylene homopolymer (H-PP2) is produced, whereas in the third reactor ($3^{rd}$ R') and optionally in a fourth reactor ($4^{th}$ R') the elastomeric propylene copolymer (E2) of the second heterophasic propylene copolymer (HECO2) is obtained.

The term "sequential polymerization process" indicates that the second heterophasic propylene copolymer

(HECO2) is produced in at least two reactors, preferably in three or four reactors, connected in series. Accordingly the present process comprises at least a first reactor ($1^{st}$ R'), an optional second reactor ($2^{nd}$ R'), a third reactor ($3^{rd}$ R') and optional a fourth reactor ($4^{th}$ R'). The term "polymerization reactor" shall indicate that the main polymerization takes place. Thus in case the process consists of three or four polymerization reactors, this definition does not exclude the option that the overall process comprises for instance a pre-polymerization step in a pre-polymerization reactor. The term "consist of" is only a closing formulation in view of the main polymerization reactors.

As stated above in the first ($1^{st}$ R') or in the first two reactors ($1^{st}$ and $2^{nd}$ R') the matrix (M2), i.e. the propylene homopolymer (H-PP2) is produced. In case two reactors are used for the preparation of the propylene homopolymer (H-PP2), in each reactor a propylene homopolymer fraction (H-PP2a) and (H-PP2b) is produced which may differ in the melt flow rate as indicated above. Preferably the first propylene homopolymer fraction (H-PP2a) is produced in the first reactor ($1^{st}$ R') whereas the second propylene homopolymer fraction (H-PP2b) is produced in the second reactor ($2^{nd}$ R').

Preferably the weight ratio between the first propylene homopolymer fraction (H-PP2a) and second propylene homopolymer fraction (H-PP2b) is 20/80 to 80/20, more preferably 30/70 to 70/30, yet more preferably 40/60 to 65/35.

After the first reactor ($1^{st}$ R') or optional second reactor ($2^{nd}$ R') the matrix (M2), i.e. the propylene homopolymer (H-PP2), of the second heterophasic propylene copolymer (HECO2), is obtained. This matrix (M2) is subsequently transferred into the third reactor ($3^{rd}$ R') and optional fourth reactor ($4^{th}$ R') in which the elastomeric propylene copolymer (E2) is produced and thus the second heterophasic propylene copolymer (HECO2) of the instant invention is obtained.

Preferably the weight ratio between the matrix (M2), i.e. the propylene homopolymer (H-PP2), and the elastomeric propylene copolymer (E2) [(M2)/(E2)] is 91/9 to 60/40, more preferably 90/10 to below 70/30.

The first reactor ($1^{st}$ R') is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

The second reactor ($2^{nd}$ R'), the third reactor ($3^{rd}$ R') and fourth reactor ($4^{th}$ R') are preferably gas phase reactors (GPR). Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor ($1^{st}$ R') is a slurry reactor (SR), like loop reactor (LR), whereas the second reactor ($2^{nd}$ R'), the third reactor ($3^{rd}$ R') and the optional fourth reactor ($4^{th}$ R') are gas phase reactors (GPR). Accordingly for the instant process at least two, preferably two or three polymerization reactors, namely a slurry reactor (SR), like loop reactor (LR), a first gas phase reactor (GPR-1), a second gas phase reactor (GPR-2) and optionally a third gas phase reactor (GPR-3) connected in series are used. If needed prior to the slurry reactor (SR) a pre-polymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, in the instant process for producing the second heterophasic propylene copolymer (HECO2), as defined above the conditions for the first reactor ($1^{st}$ R'), i.e. the slurry reactor (SR), like a loop reactor (LR), may be as follows:

- the temperature is within the range of 40 °C to 110 °C, preferably between 60 °C and 100 °C, like 68 to 95 °C,
- the pressure is within the range of 20 bar to 80 bar, preferably between 40 bar to 70 bar,
- hydrogen can be added for controlling the molar mass in a manner known per se.

Subsequently, the reaction mixture from the first reactor ($1^{st}$ R') is transferred to the second reactor ($2^{nd}$ R'), i.e. gas phase reactor (GPR-1), whereby the conditions are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The condition in the third reactor ($3^{rd}$ R') and the fourth reactor ($4^{th}$ R'), preferably in the second gas phase reactor (GPR-2) and third gas phase reactor (GPR-3), are similar to the second reactor ($2^{nd}$ R').

The residence time can vary in the three or four reactor zones.

In one embodiment of the process for producing the second heterophasic propylene copolymer (HECO2), the residence time the first reactor ($1^{st}$ R'), i.e. the slurry reactor (SR), like a loop reactor (LR), is in the range 0.2 to 4 hours, e.g. 0.3 to 1.5 hours and the residence time in the gas phase reactors will generally be 0.2 to 6.0 hours, like 0.5 to 4.0 hours.

If desired, the polymerization may be effected in a known manner under supercritical conditions in the first reactor ($1^{st}$ R'), i.e. in the slurry reactor (SR), like in the loop reactor (LR), and/or as a condensed mode in the gas phase reactors (GPR).

Preferably the process comprises also a prepolymerisation with the catalyst system, as mentioned below, comprising a Ziegler-Natta procatalyst, an external donor and optionally a cocatalyst.

In a preferred embodiment, the prepolymerisation is conducted as bulk slurry polymerization in liquid propylene, i.e. the liquid phase mainly comprises propylene, with minor amount of other reactants and optionally inert components dissolved therein.

The prepolymerisation reaction is typically conducted at a temperature of 0 to 50 °C, preferably from 10 to 45 °C, and more preferably from 15 to 40 °C.

The pressure in the prepolymerisation reactor is not critical but must be sufficiently high to maintain the reaction mixture in liquid phase. Thus, the pressure may be from 20 to 100 bar, for example 30 to 70 bar.

The catalyst components are preferably all introduced to the prepolymerisation step. However, where the solid catalyst component (i) and the cocatalyst (ii) can be fed separately it is possible that only a part of the cocatalyst is introduced into the prepolymerisation stage and the remaining part into subsequent polymerization stages. Also in such cases it is necessary to introduce so much cocatalyst into the prepolymerisation stage that a sufficient polymerization reaction is obtained therein.

It is possible to add other components also to the prepolymerisation stage. Thus, hydrogen may be added into the prepolymerisation stage to control the molecular weight of the prepolymer as is known in the art. Further, antistatic additive may be used to prevent the particles from adhering to each other or to the walls of the reactor.

The precise control of the prepolymerisation conditions and reaction parameters is within the skill of the art.

According to the invention the second heterophasic propylene copolymer (HECO2) is obtained by a sequential polymerization process, as described above, in the presence of a catalyst system comprising a Ziegler-Natta catalyst and optionally an external donor, preferably a catalyst system comprising three components, namely as component (i) a Ziegler-Natta procatalyst, and optionally as component (ii) an organometallic cocatalyst and as component (iii) an external donor represented by formula (IIIa) or (IIIb), preferably represented by formula (IIIa), as described above in accordance with the preparation of the first heterophasic propylene copolymer (HECO1).

More preferably the external donor is of formula (IIIa), like dicyclopentyl dimethoxy silane $[Si(OCH_3)_2(cyclopentyl)_2]$ or diisopropyl dimethoxy silane $[Si(OCH_3)_2(CH(CH_3)_2)_2]$.

The additives as stated above are added to the second heterophasic propylene copolymer (HECO2) preferably by extruding. For mixing/extruding, a conventional compounding or blending apparatus, e.g. a Banbury mixer, a 2-roll rubber mill, Buss-co-kneader or a twin screw extruder may be used. The polymer materials recovered from the extruder are usually in the form of pellets.

**Polyolefin composition and its use**

The first heterophasic propylene copolymer (HECO1) and the second heterophasic propylene copolymer (HECO2) are combined to form the inventive polyolefin composition. Blending can be achieved in any conventional manner such as e.g. in an extruder.

In order to obtain the desired properties, the heterophasic propylene copolymers are preferably blended in a specific mixing ratio. Thus, inventive polyolefin composition preferably comprises the first heterophasic propylene copolymer (HECO1) and the second heterophasic propylene copolymer (HECO2) in a weight ratio [(HECO1):(HECO2)] of 9:1 to 200:1, like 9:1 to 200:1 whereby values of 10:1 and/or 15:1 are excluded, more preferably of more than 15:1 to 100:1, like 16:1 to 100:1, still more preferably in the range of 19:1 to 100:1, yet more preferably of 25:1 to 100:1.

It is preferred that the amount of the second heterophasic propylene copolymer (HECO2) in the polyolefin composition is rather low. Accordingly it is preferred that the the amount of the second heterophasic propylene copolymer (HECO2) is equal or below 10 wt.-%, like in the range of 0.5 to equal or below 10 wt.-%, more preferably is equal or below 8.0 wt.-%, like in the range of 1.0 to equal or below 8.0 wt.-%, still more preferably is equal or below 5.0 wt.-%, like in the range of 1.0 to equal or below 5.0 wt.-%, yet more preferably is equal or below 4.5 wt.-%, like in the range of 1.0 to equal or below 4.5 wt.-%, based on the total weight of the polyolefin composition.

The inventive polyolefin composition may comprise further polymers, however it is preferred that the two heterophasic propylene copolymers (HECO1) and (HECO2) constitute the main amount of the composition. Therefore it is preferred that the two heterophasic propylene copolymers (HECO1) and (HECO2) make up at least 70 wt.-%, more preferably at least 80 wt.-%, still more preferably at least 90 wt.-%, yet more preferably at least 95 wt.-%, of the inventive polyolefin composition. The remaining part may be additives, fillers, ($\alpha$)-nucleating agents, and polymers used as carrier for the additives or elastomers.

Thus in one preferred embodiment, the polyolefin composition of the present invention comprises

(a) at least 85 wt.-%, preferably at least 90 wt.-%, more preferably at least 95 wt.-%, based on the total weight of the polyolefin composition, of the first heterophasic propylene copolymer (HECO1);

(b) 0.5 to equal or below 10 wt.-%, preferably 1.0 to equal or below 5.0 wt.-%, more preferably 1.0 to equal or below 4.5 wt.-%, based on the total weight of the polyolefin composition, of the second heterophasic propylene copolymer (HECO2);

(c) optionally up to 2.0 wt.-%, preferably 0.0001 to 1.5 wt.-%, more preferably 0.3 to equal or below 1.0 wt.-%, based on the total weight of the polyolefin composition, of a nucleating agent, like a $\alpha$-nucleating agent.

Preferably said nucleating agent is a $\alpha$-nucleating agent as mentioned when defining the first heterophasic propylene copolymer (HECO1) and the second heterophasic propylene copolymer (HECO2), respectively. Still more preferably the ($\alpha$-)nucleating agent originates from the first heterophasic propylene copolymer (HECO1) and/or the second heterophasic propylene copolymer (HECO2). Thus it is especially preferred that the polyolefin composition comprises as ($\alpha$-)nucleating agent talc and vinylcycloalkane, like vinylcyclohexane (VCH).

Preferably the polyolefin composition as defined herein has

(a) a tensile modulus measured according to ISO 572-2 of at least 1,310 MPa, more preferably in the range of 1,310 to 1,500 MPa; like in the range of 1,350 to 1,450 MPa,

and/or

(b) a Charpy notched impact measured according to ISO 179 2C / DIN 53453 (-20 °C) of at least 4.0 kJ/m$^2$, more preferably in the range of 4.0 to 6.0 kJ/m$^2$, like in the range of 4.2 to 5.5 kJ/m$^2$, and/or a Charpy notched impact measured according to ISO 179 2C / DIN 53453 (23 °C) of at least 9.0 kJ/m$^2$, like more preferably in the range of 9.0 to 13.0 kJ/m$^2$, like in the range of 10.0 to 12.0 kJ/m$^2$;

and/or

(c) a puncture energy (23 °C) measured according to ISO 6603-2 of at least 10.0 J, more preferably in the range of 10.0 to 14.0 J, like in the range of 10.5 to 12.0 J.

The present invention is also directed to articles, like toys, appliance parts, and (thin wall) packaging material, preferably (thin wall) packaging material, comprising the polyolefin composition of the present invention. Preferably the thin wall packaging material has a thickness of equal or below 2 mm, preferably in the range of 0.2 to 2.0 mm. Preferably the article, like like toys, appliance parts, and the packaging material, e.g. the thin wall packaging material, according to this invention comprises at least 70 wt.-%, more preferably comprises at least 90 wt.-%, yet more preferably comprises at least 95 wt.-%, still more preferably consists of, a polyolefin composition as defined herein. Said thin wall packaging material is preferably produced by injection molding Further the thin wall packaging material is preferably selected from the group consisting of cups, boxes, trays, pails, buckets, bowls, lids, flaps, caps, CD covers, DVD covers and the like.

Further the present invention is also directed to the use of the polyolefin composition as defined herein for the manufacture of an article as defined in the previous paragraph.

The present invention is especially directed to the use of a second heterophasic propylene copolymer (HECO2) in a polyolefin composition to improve puncture resistance of said polyolefin composition, wherein the amount of the second heterophasic propylene copolymer (HECO2) in the polyolefin composition is equal or below 10 wt.-%, preferably in the range of 0.5 to equal or below 10 wt.-%, more preferably in the range of 1.0 to equal or below 5.0 wt.-%, yet more preferably in the range of 1.0 to equal or below 4.5 wt.-%, based on the total weight of the polyolefin composition, wherein further the second heterophasic propylene copolymer (HECO2) comprises a propylene homopolymer (H-PP2) and an elastomeric propylene copolymer (E2),

(i) said second heterophasic propylene copolymer (HECO2) has a melt flow rate $MFR_2$ (230°C) measured according to ISO 1133 in the range of above 1.0 to 8.0 g/10min;

(ii) the xylene cold soluble (XCS) fraction of the second heterophasic propylene copolymer (HECO2) has an intrinsic viscosity determined according to DIN ISO 1628/1 (in decalin at 135 °C) in the range of more than 3.7 to 9.0 dl/g; and

(iii) the comonomer content of the xylene cold soluble (XCS) fraction of the second heterophasic propylene copolymer (HECO2) is in the range of 10.0 to 40.0 wt.-%,

preferably the improvement of puncture resistance is achieved if the low temperature puncture energy at -20 °C is at least 1.8 J higher for the polyolefin composition comprising the second heterophasic propylene copolymer (HECO2) compared to the same polyolefin composition but without the second heterophasic propylene copolymer (HECO2). Concerning the precise conditions of measurement reference is made to example section.

Preferably the second heterophasic propylene copolymer (HECO2) is part of a polyolefin composition comprising

(a) at least 85 wt.-%, preferably at least 90 wt.-%, more preferably at least 95 wt.-%, based on the total weight of the polyolefin composition, of the first heterophasic propylene copolymer (HECO1);
(b) 0.5 to equal or below 10 wt.-%, preferably 1.0 to equal or below 5.0 wt.-%, more preferably 1.0 to equal or below 4.5 wt.-%, based on the total weight of the polyolefin composition, of the second heterophasic propylene copolymer (HECO2);
(c) optionally up to 2.0 wt.-%, preferably 0.0001 to 1.5 wt.-%, more preferably 0.3 to equal or below 1.0 wt.-%, based on the total weight of the polyolefin composition, of a nucleating agent, like a $\alpha$-nucleating agent.

Further preferred embodiments of the second heterophasic propylene copolymer (HECO2) and the polyolefin composition according to this invention, reference is made to the information provided above.
The present invention will now be described in further detail by the examples provided below.

**EXAMPLES**

**1. Definitions/Measuring Methods**

The following definitions of terms and determination methods apply for the above general description of the invention as well as to the below examples unless otherwise defined.

**Quantification of microstructure by NMR spectroscopy**

Quantitative nuclear-magnetic resonance (NMR) spectroscopy was used to quantify the comonomer content of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.
Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).
With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.
The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.
For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S.,

Macromolecules 33 (2000), 1157). Equations used for absolute propylene content were not modified.

The mole percent comonomer incorporation was calculated from the mole fraction: E [mol%] = 100 * fE

The weight percent comonomer incorporation was calculated from the mole fraction:

$$E\,[wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**DSC analysis, melting temperature ($T_m$) and heat of fusion ($H_f$), crystallization temperature ($T_c$) and heat of crystallization ($H_c$):** measured with a TA Instrument Q2000 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature and heat of crystallization ($H_c$) are determined from the cooling step, while melting temperature and heat of fusion ($H_f$) are determined from the second heating step.

**$MFR_2$ (230 °C)** is measured according to ISO 1133 (230 °C, 2.16 kg load).

**The xylene cold solubles (XCS, wt.-%):** Content of xylene cold solubles (XCS) is determined at 25 °C according ISO 16152; first edition; 2005-07-01.

**Intrinsic viscosity** is measured according to DIN ISO 1628/1, October 1999 (in Decalin at 135 °C).

**Tensile Modulus; Tensile strain at break** are measured according to ISO 527-2 (cross head speed = 1 mm/min; 23 °C) using injection molded specimens as described in EN ISO 1873-2 (dog bone shape, 4 mm thickness).

**Charpy impact test:** The Charpy notched impact strength (Charpy NIS) is measured according to ISO 179 2C / DIN 53453 at 23 °C and -20 °C, using injection molded bar test specimens of 80x10x4 $mm^3$ prepared in accordance with ISO 294-1:1996.

**)Puncture energy, maximum force and puncture deflection** is determined in the instrumented falling weight test according to ISO 6603-2 using injection moulded plaques of 60x60x1 mm and a test speed of 2.2 m/s, clamped, lubricated striker with 20 mm diameter. The reported puncture energy results from an integral of the failure energy curve measured at (60x60x1 mm).

## 2. Examples

The catalyst used in the polymerization processes has been produced as follows: First, 0.1 mol of $MgCl_2$ x 3 EtOH was suspended under inert conditions in 250 ml of decane in a reactor at atmospheric pressure. The solution was cooled to the temperature of -15°C and 300 ml of cold $TiCl_4$ was added while maintaining the temperature at said level. Then, the temperature of the slurry was increased slowly to 20 °C. At this temperature, 0.02 mol of dioctylphthalate (DOP) was added to the slurry. After the addition of the phthalate, the temperature was raised to 135 °C during 90 minutes and the slurry was allowed to stand for 60 minutes. Then, another 300 ml of $TiCl_4$ was added and the temperature was kept at 135 °C for 120 minutes. After this, the catalyst was filtered from the liquid and washed six times with 300 ml heptane at 80 °C. Then, the solid catalyst component was filtered and dried. Catalyst and its preparation concept is described in general e.g. in patent publications EP491566, EP591224 and EP586390. The catalyst was prepolymerized with vinyl cyclohexane in an amount to achieve a concentration of 200 ppm poly(vinyl cyclohexane) (PVCH) in the final polymer (see EP 1183307 A1). As co-catalyst triethyl-aluminium (TEAL) and as donor dicyclo pentyl dimethoxy silane (D-donor) (HECO2) and diethylaminotriethoxysilane [U-Donor] (HECO1), respectively, were used. The aluminium to donor ratio is indicated in table 1.

**Table 1**: Preparation of heterophasic propylene copolymers (HECO)

| Parameter | unit | HECO 1 | HECO 2 |
|---|---|---|---|
| **Prepolymerisation** | | | |
| temperature | [°C] | 30 | 30 |

(continued)

| Parameter | unit | HECO 1 | HECO 2 |
|---|---|---|---|
| **Prepolymerisation** | | | |
| pressure | [bar] | 55 | 56 |
| Al/donor ratio | [mol/mol] | 20.6 | 10.3 |
| residence time | [h] | 0.25 | 0.26 |
| **Loop** | | | |
| temperature | [°C] | 75 | 76 |
| pressure | [bar] | 55 | 56 |
| residence time | [h] | 0.7 | 0.8 |
| ethylene feed | [kg/h] | 0 | 0 |
| H2/C3 ratio | [mol/kmol] | 22.0 | 24.7 |
| C2 | [wt-%] | 0 | 0 |
| XCS | [wt.-%] | 2.0 | 2.1 |
| MFR | [g/10min] | 270 | 160 |
| Split | [wt.-%] | 45.0 | 47.5 |
| GPR1 | | | |
| temperature | [°C] | 90 | 80 |
| pressure | [bar] | 25 | 24 |
| residence time | [h] | 1.1 | 1.0 |
| ethylene feed | [kg/h] | 0 | 0 |
| H2/C3 ratio | [mol/kmol] | 135 | 44.8 |
| C2 | [wt-%] | 0 | 0 |
| XCS | [wt.-%] | 2.0 | 2.0 |
| MFR | [g/10min] | 240 | 55 |
| Split | [wt.-%] | 55.0 | 31.7 |
| GPR2 | | | |
| temperature | [°C] | 75 | 67 |
| pressure | [bar] | 21 | 21 |
| residence time | [h] | 0.45 | |
| H2/C3 ratio | [mol/kmol] | 40.0 | 22.8 |
| C2/C3 ratio | [mol/kmol] | 250 | 242 |
| C2 | [wt%] | 5.0 | 7 |
| XCS | [wt.-%] | 16.5 | 18 |
| MFR | [g/10min] | 100 | 20 |
| Split | [wt.-%] | 18.1 | 11.7 |
| GPR3 | | | |
| temperature | [°C] | 72 | 67 |
| pressure | [bar] | 15 | 15 |
| residence time | [h] | 0.3 | |

(continued)

| Loop | | | |
|---|---|---|---|
| H2/C2 ratio | [mol/kmol] | 40.0 | 22.4 |
| C2/C3 ratio | [mol/kmol] | 750 | 250 |
| Split | [wt.-%] | 10.1 | 9.1 |
| n.d. not determined | | | |

**Table 2:** The heterophasic polypropylenes (HECO)

| | | HECO 1 | HECO2 |
|---|---|---|---|
| MFR of Matrix | [g/10min] | 240 | 55 |
| XCS of Matrix | [wt%] | 2.0 | 2.0 |
| C2 of Matrix | [wt-%] | 0 | 0 |
| MFR | [g/10min] | 50 | 4.2 |
| XCS | [wt%] | 23 | 25 |
| C2 total | [wt%] | 9.7 | 7.6 |
| C2 in XCS | [wt%] | 41.8 | 20.8 |
| IV of XCS | [dl/g] | 3.4 | 6.3 |
| n.d. not determined | | | |

Polyolefin compositions according to the present invention were produced by melt blending two heterophasic propylene copolymers.

**Table 3:** Properties of the inventive examples and comparative examples

| Example | | CE 1 | IE 1 | IE2 | IE3 |
|---|---|---|---|---|---|
| **HECO**1* | [wt%] | 100 | 97 | 95 | 93 |
| HECO 2 | [wt%] | - | 3 | 5 | 7 |
| MFR | [g/10min] | 50 | 48 | 47 | 46 |
| Tensile Modulus | [MPa] | 1302 | 1373 | 1381 | 1360 |
| Tensile strain at break | [%] | 9.5 | 14 | 16 | 17 |
| NIS +23°C | [kJ/m$^2$] | 8.0 | 10.8 | 10.8 | 10.7 |
| NIS -20°C | [kJ/m$^2$] | 3.9 | 4.5 | 4.7 | 4.9 |
| maximum force +23 °C | [N] | 1033 | 1020 | 1020 | |
| puncture deflection +23 °C | [mm] | 13.7 | 17.1 | 16.8 | |
| puncture energy +23 °C | [J] | 9.1 | 11.5 | 11.3 | |
| maximum force -20 °C | [N] | 1435 | 1515 | 1450 | |
| puncture deflection -20 °C | [mm] | 8.2 | 10.2 | 9.7 | |
| puncture energy -20 °C | [J] | 6.0 | 8.8 | 7.9 | |
| NIS notched Charpy impact strength<br>* contains 0.8 wt.-% talc | | | | | |

The characterization of the base polymers are summarized in Table 2. The properties of the inventive and comparative examples are summarized in Table 3. CE1 relates to a first heterophasic propylene copolymer (HECO1).

The results described in table 3 show an improvement in the balance of flowability, toughness, stiffness, impact and strain at break.

## Claims

**1.** Polyolefin composition comprising

(a) a first heterophasic propylene copolymer (HECO1) having

(i) a melt flow rate $MFR_2$ (230 °C) measured according to ISO 1133 in the range of 40.0 to 60.0 g/10min, and
(ii) a xylene cold soluble content (XCS) determined according ISO 16152 (25 °C) of at least 15 wt.-%, wherein further
(iii) the intrinsic viscosity (IV) determined according to DIN ISO 1628/1 (in decalin at 135 °C) of the xylene cold soluble (XCS) fraction of the heterophasic propylene copolymer (HECO1) is in the range of 2.5 to 4.3 dl/g, and

(b) a second heterophasic propylene copolymer (HECO2) comprising a propylene homopolymer (H-PP2) and an elastomeric propylene copolymer (E2), wherein

(i) said second heterophasic propylene copolymer (HECO2) has a melt flow rate $MFR_2$ (230°C) measured according to ISO 1133 in the range of above 1.0 to 8.0 g/10min;
(ii) the xylene cold soluble (XCS) fraction of the second heterophasic propylene copolymer (HECO2) has an intrinsic viscosity determined according to DIN ISO 1628/1 (in decalin at 135 °C) in the range of more than 3.7 to 9.0 dl/g; and
(iii) the comonomer content of the xylene cold soluble (XCS) fraction of the second heterophasic propylene copolymer (HECO2) is in the range of 10.0 to 40.0 wt.-%,

wherein

- the weight ratio of the first heterophasic propylene copolymer (HECO1) and the second heterophasic propylene copolymer (HECO2) [(HECO1)/(HECO2)] is in the range of 9:1 to 200:1;
and/or
- the amount of the second heterophasic propylene copolymer (HECO2) in the polyolefin composition is equal or below 10 wt.-%, based on the total weight of the polyolefin composition.

**2.** The polyolefin composition according to claim 1, wherein the polyolefin composition has a melt flow rate $MFR_2$ (230 °C) measured according to ISO 1133 of at least 40 gl10min, preferably in the range of 40.0 to 60.0 g/10min.

**3.** The polyolefin composition according to claim 1 or 2, wherein

(a) the second heterophasic propylene copolymer (HECO2) has a xylene cold soluble content (XCS) determined according ISO 16152 (25 °C) of below 40 wt.-%, preferably in the range of 8.0 to 35 wt.-%,
and/or
(b) the propylene homopolymer (H-PP2) of the second heterophasic propylene copolymer (HECO2) has a melt flow rate $MFR_2$ (230°C) measured according to ISO 1133 in the range of above 15 to 400 g/10min.

**4.** The polyolefin composition according to any one of the preceding claims, wherein the second heterophasic propylene copolymer (HECO2) fulfills the in-equation (IV)

$$0.50 \geq \left(0.241 \times \frac{C}{wt.\text{–}\%}\right) - \left(1.14 \times \frac{IV}{dl/g}\right) \qquad \text{(IV)}$$

wherein

C is the comonomer content in wt.-% of the xylene cold soluble (XCS) fraction of the second heterophasic propylene copolymer (HECO2), and

IV is the intrinsic viscosity in dl/g of the xylene cold soluble (XCS) fraction of the second heterophasic propylene copolymer (HECO2).

**5.** The polyolefin composition according to any one of the preceding claims, wherein

(i) the first heterophasic propylene copolymer (HECO1) has a comonomer content in the range of 6.0 to 17.0 wt.-%, and/or
(ii) the comonomer content, preferably the ethylene content, of the xylene cold soluble (XCS) fraction of the first heterophasic propylene copolymer (HECO1) is at least 26 wt.-%, preferably in the range of 26 to 40 wt.-%.

**6.** The polyolefin composition according to any one of the preceding claims, wherein the second heterophasic propylene copolymer (HECO2) has a comonomer content below 20.0 wt.-%.

**7.** The polyolefin composition according to any one of the preceding claims, wherein the first heterophasic propylene copolymer (HECO1) comprises a polypropylene (PP1) as matrix and an elastomeric propylene copolymer (E1) dispersed in said matrix, wherein preferably

(i) said polypropylene (PP1) is a propylene homopolymer (H-PP1), and/or
(ii) said polypropylene (PP1) has a melt flow rate $MFR_2$ (230°C) measured according to ISO 1133 of 60 to 400 g/10min,

**8.** The polyolefin composition according to any one of the preceding claims, wherein the polyolefin composition comprises additionally up to 2.0 wt.-% of a nucleating agent, based of the total weight of the polyolefin composition, wherein preferably the nucleating agent is a $\alpha$-nucleating agent.

**9.** The polyolefin composition according to any one of the preceding claims, wherein the polyolefin composition comprises

(a) at least 85 wt.-%, based on the total weight of the polyolefin composition, of the first heterophasic propylene copolymer (HECO1);
(b) 0.5 to 10 wt.-%, based on the total weight of the polyolefin composition, of the second heterophasic propylene copolymer (HECO2);
(c) optionally up to 2.0 wt.-%, based on the total weight of the polyolefin composition, of a nucleating agent, like a $\alpha$-nucleating agent.

**10.** Polyolefin composition according to any one of the preceding claims, wherein the polyolefin composition has

(a) a tensile modulus measured according to ISO 572-2 of at least 1,310 MPa, like in the range of 1,310 to 1,500 MPa; and/or
(b) a Charpy notched impact measured according to ISO 179 2C / DIN 53453 (-20 °C) of at least 4.0 kJ/$m^2$, like in the range of 4.0 to 6.0 kJ/$m^2$, and/or a Charpy notched impact measured according to ISO 179 2C / DIN 53453 (23 °C) of at least 9.0 kJ/$m^2$, like in the range of 9.0 to 13.0 kJ/$m^2$; and/or
(c) a puncture energy (23 °C) measured according to ISO 6603-2 of at least 10.0 J, like in the range of 10.0 to 14.0 J.

**11.** Packaging material comprising at least to 60 wt.-%, preferably at least 80 wt.-%, of the polyolefin composition according to any one of the preceding claims 1 to 10.

**12.** Packaging material according to claim 11, wherein the packaging material is a thin wall packaging material having a thickness of equal or below 2 mm.

**13.** Use of a polyolefin composition according to any one of the preceding claims 1 to 10 for the production of packaging material, like thin wall packaging material having a thickness of equal or below 2 mm.

**14.** Use of a second heterophasic propylene copolymer (HECO2) in a polyolefin composition to improve puncture resistance of said polyolefin composition, wherein the amount of the second heterophasic propylene copolymer (HECO2) in the polyolefin composition is equal or below 10 wt.-%, based on the total weight of the polyolefin composition,

wherein further the second heterophasic propylene copolymer (HECO2) comprises a propylene homopolymer (H-PP2) and an elastomeric propylene copolymer (E2),

(i) said second heterophasic propylene copolymer (HECO2) has a melt flow rate $MFR_2$ (230°C) measured according to ISO 1133 in the range of above 1.0 to 8.0 g/10min;
(ii) the xylene cold soluble (XCS) fraction of the second heterophasic propylene copolymer (HECO2) has an intrinsic viscosity determined according to DIN ISO 1628/1 (in decalin at 135 °C) in the range of more than 3.7 to 9.0 dl/g; and
(iii) the comonomer content of the xylene cold soluble (XCS) fraction of the second heterophasic propylene copolymer (HECO2) is in the range of 10.0 to 40.0 wt.-%,

preferably the improvement of puncture resistance is achieved if the low temperature puncture energy at -20 °C is at least 1.8 J higher for the polyolefin composition comprising the second heterophasic propylene copolymer (HECO2) compared to the same polyolefin composition but without the second heterophasic propylene copolymer (HECO2).

**15.** Use according to claim 14, wherein the polyolefin composition comprises

(a) at least 85 wt.-%, based on the total weight of the polyolefin composition, of the first heterophasic propylene copolymer (HECO1);
(b) 0.5 to 10 wt.-%, based on the total weight of the polyolefin composition, of the second heterophasic propylene copolymer (HECO2);
(c) optionally up to 2 wt.-%, based on the total weight of the polyolefin composition, of a nucleating agent, like a $\alpha$-nucleating agent.

**16.** Use according to claim 14 or 15, wherein the polyolefin composition is defined as in any one of the preceding claims 1 to 10.

**Patentansprüche**

**1.** Polyolefin-Zusammensetzung, umfassend

(a) ein erstes heterophasisches Propylen-Copolymer (HECO1) mit

(i) einer Schmelze-Fließ-Rate $MFR_2$ (230°C), gemessen gemäß ISO 1133, in dem Bereich von 40,0 bis 60,0 g/10 min, und
(ii) einem in kaltem Xylol löslichen Gehalt (XCS), bestimmt gemäß ISO 16152 (25°C), von mindestens 15 Gew.-%,
wobei weiterhin
(iii) die Grenz-Viskosität (IV), bestimmt gemäß DIN ISO 1628/1 (in Decalin bei 135°C), von der in kaltem Xylol löslichen Fraktion (XCS) von dem heterophasischen Propylen-Copolymer (HECO1) in dem Bereich von 2,5 bis 4,3 dl/g liegt, und

(b) ein zweites heterophasisches Propylen-Copolymer (HECO2), umfassend ein Propylen-Homopolymer (H-PP2) und ein elastomeres Propylen-Copolymer (E2), wobei

(i) das zweite heterophasische Propylen-Copolymer (HECO2) eine Schmelze-Fließ-Rate $MFR_2$ (230°C), gemessen gemäß ISO 1133, in dem Bereich von oberhalb 1,0 bis 8,0 g/10 min aufweist;
(ii) die in kaltem Xylol lösliche Fraktion (XCS) von dem zweiten heterophasischen Propylen-Copolymer (HECO2) eine Grenz-Viskosität, bestimmt gemäß DIN ISO 1628/1 (in Decalin bei 135°C), in dem Bereich von mehr als 3,7 bis 9,0 dl/g aufweist; und
(iii) der Comonomer-Gehalt von der in kaltem Xylol löslichen Fraktion (XCS) des zweiten heterophasischen Propylen-Copolymers (HECO2) in dem Bereich von 10,0 bis 40,0 Gew.-% liegt,

wobei

- das Gewichtsverhältnis des ersten heterophasischen Propylen-Copolymers (HECO1) und des zweiten heterophasischen Propylen-Copolymers (HEC02) [(HECO1)/(HECO2) in dem Bereich von 9:1 bis 200:1

liegt;
und/oder
- die Menge des zweiten heterophasischen Propylen-Copolymers (HECO2) in der Polyolefin-Zusammensetzung gleich oder unter 10 Gew.-%, basierend auf dem Gesamtgewicht der Polyolefin-Zusammensetzung, liegt.

**2.** Polyolefin-Zusammensetzung nach Anspruch 1, wobei die Polyolefin-Zusammensetzung eine Schmelze-Fließ-Rate $MFR_2$ (230°C), gemessen gemäß ISO 1133, von mindestens 40 g/10 min, vorzugsweise in dem Bereich von 40,0 bis 60,0 g/10 min, aufweist.

**3.** Polyolefin-Zusammensetzung nach Anspruch 1 oder 2, wobei

(a) das zweite heterophasische Propylen-Copolymer (HECO2) einen in kaltem Xylol löslichen Gehalt (XCS), bestimmt gemäß ISO 16152 (25°C), von unter 40 Gew.-%, vorzugsweise in dem Bereich von 8,0 bis 35 Gew.-%, aufweist,
und/oder
(b) das Propylen-Homopolymer (H-PP2) des zweiten heterophasischen Propylen-Copolymers (HECO2) eine Schmelze-Fließ-Rate $MFR_2$ (230°C), gemessen gemäß ISO 1133, in dem Bereich von oberhalb 15 bis 400 g/10 min aufweist.

**4.** Polyolefin-Zusammensetzung nach einem der vorangehenden Ansprüche, wobei das zweite heterophasische Propylen-Copolymer (HEC02) die Ungleichung (IV) erfüllt

$$0{,}50 \geq \left(0{,}241 \times \frac{C}{Gew.-\%}\right) - \left(1{,}14 \times \frac{IV}{dl/g}\right) \qquad \text{(IV)}$$

worin

C der Comonomer-Gehalt in Gew.-% der in kaltem Xylol löslichen Fraktion (XCS) des zweiten heterophasischen Propylen-Copolymers (HEC02) ist, und
IV die Grenz-Viskosität in dl/g der in kaltem Xylol löslichen Fraktion (XCS) des zweiten heterophasischen Propylen-Copolymers (HECO2) ist.

**5.** Polyolefin-Zusammensetzung nach einem der vorangehenden Ansprüche, wobei

(i) das erste heterophasische Propylen-Copolymer (HECO1) einen Comonomer-Gehalt in dem Bereich von 6,0 bis 17,0 Gew.-% aufweist, und/oder
(ii) der Comonomer-Gehalt, vorzugsweise der EthylenGehalt, der in kaltem Xylol löslichen Fraktion (XCS) des ersten heterophasischen Propylen-Copolymers (HEC01) mindestens 26 Gew.-%, vorzugsweise in dem Bereich von 26 bis 40 Gew.-%, ist.

**6.** Polyolefin-Zusammensetzung nach einem der vorangehenden Ansprüche, wobei das zweite heterophasische Propylen-Copolymer (HECO2) einen Comonomer-Gehalt unter 20,0 Gew.-% aufweist.

**7.** Polyolefin-Zusammensetzung nach einem der vorangehenden Ansprüche, wobei das erste heterophasische Propylen-Copolymer (HECO1) ein Polypropylen (PP1) als Matrix und ein elastomeres Propylen-Copolymer (E1), dispergiert in der Matrix, umfasst, wobei vorzugsweise

(i) das Polypropylen (PP1) ein Propylen-Homopolymer (H-PP1) ist,
und/oder
(ii) das Polypropylen (PP1) eine Schmelze-Fließ-Rate $MFR_2$ (230°C), gemessen gemäß ISO 1133, von 60 bis 400 g/10 min aufweist.

**8.** Polyolefin-Zusammensetzung nach einem der vorangehenden Ansprüche, wobei die Polyolefin-Zusammensetzung zusätzlich bis zu 2,0 Gew.-% von einem Keimbildungs-Mittel, basierend auf dem Gesamtgewicht der Polyolefin-Zusammensetzung, wobei das Keimbildungs-Mittel vorzugsweise ein $\alpha$-Keimbildungs-Mittel ist, umfasst.

9. Polyolefin-Zusammensetzung nach einem der vorangehenden Ansprüche, wobei die Polyolefin-Zusammensetzung umfasst

(a) mindestens 85 Gew.-%, basierend auf dem Gesamtgewicht der Polyolefin-Zusammensetzung, von dem ersten heterophasischen Propylen-Copolymer (HECO1);
(b) 0,5 bis 10 Gew.-%, basierend auf dem Gesamtgewicht der Polyolefin-Zusammensetzung, von dem zweiten heterophasischen Propylen-Copolymer (HECO2);
(c) gegebenenfalls bis zu 2,0 Gew.-%, basierend auf dem Gesamtgewicht der Polyolefin-Zusammensetzung, von einem Keimbildungs-Mittel, wie einem $\alpha$-Keimbildungs-Mittel.

10. Polyolefin-Zusammensetzung nach einem der vorangehenden Ansprüche, wobei die Polyolefin-Zusammensetzung aufweist

(a) einen Zugmodul, gemessen gemäß ISO 572-2, von mindestens 1 310 MPa, wie in dem Bereich von 1 310 bis 1 500 MPa;
und/oder
(b) eine Kerbschlag-Festigkeit nach Charpy, gemessen gemäß ISO 179 2C / DIN 53453 (-20°C), von mindestens 4,0 kJ/$m^2$, wie in dem Bereich von 4,0 bis 6,0 kJ/$m^2$, und/oder eine Kerbschlag-Festigkeit nach Charpy, gemessen gemäß ISO 179 2C / DIN 53453 (23°C), von mindestens 9,0 kJ/$m^2$, wie in dem Bereich von 9,0 bis 13,0 kJ/$m^2$;
und/oder
(c) eine Durchstoßenergie (23°C), gemessen gemäß ISO 6603-2, von mindestens 10,0 J, wie in dem Bereich von 10,0 bis 14,0 J.

11. Verpackungsmaterial, umfassend mindestens 60 Gew.-%, vorzugsweise mindestens 80 Gew.-%, der Polyolefin-Zusammensetzung nach einem der vorangehenden Ansprüche 1 bis 10.

12. Verpackungsmaterial nach Anspruch 11, wobei das Verpackungsmaterial ein dünnwandiges Verpackungsmaterial mit einer Dicke von gleich oder unter 2 mm ist.

13. Verwendung von einer Polyolefin-Zusammensetzung nach einem der vorangehenden Ansprüche 1 bis 10 für die Herstellung von Verpackungsmaterial, wie dünnwandiges Verpackungsmaterial mit einer Dicke von gleich oder unter 2 mm.

14. Verwendung von einem zweiten heterophasischen Propylen-Copolymer (HECO2) in einer Polyolefin-Zusammensetzung zum Verbessern der Durchstoßbeständigkeit der Polyolefin-Zusammensetzung, wobei die Menge des zweiten heterophasischen Propylen-Copolymers (HECO2) in der Polyolefin-Zusammensetzung gleich oder unter 10 Gew.-%, basierend auf dem Gesamtgewicht der Polyolefin-Zusammensetzung, liegt,
wobei weiterhin das zweite heterophasische Propylen-Copolymer (HECO2) ein Propylen-Homopolymer (H-PP2) und ein elastomeres Propylen-Copolymer (E2) umfasst,

(i) das zweite heterophasische Propylen-Copolymer (HECO2) eine Schmelze-Fließ-Rate $MFR_2$ (230°C), gemessen gemäß ISO 1133, in dem Bereich von oberhalb 1,0 bis 8,0 g/10 min aufweist;
(ii) die in kaltem Xylol lösliche Fraktion (XCS) des zweiten heterophasischen Propylen-Copolymers (HECO2) eine Grenz-Viskosität, bestimmt gemäß DIN ISO 1628/1 (in Decalin bei 135°C), in dem Bereich von mehr als 3,7 bis 9,0 dl/g aufweist; und
(iii) der Comonomer-Gehalt der in kaltem Xylol löslichen Fraktion (XCS) des zweiten heterophasischen Propylen-Copolymers (HECO2) in dem Bereich von 10,0 bis 40,0 Gew.-% liegt,

vorzugsweise die Verbesserung der Durchstoßbeständigkeit erreicht wird, wenn für die das zweite heterophasische Propylen-Copolymer (HECO2) umfassende Polyolefin-Zusammensetzung die Nieder-Temperatur-Durchstoßenergie bei -20°C mindestens 1,8 J höher ist, verglichen mit der gleichen Polyolefin-Zusammensetzung, jedoch ohne das zweite heterophasische Propylen-Copolymer (HECO2).

15. Verwendung nach Anspruch 14, wobei die Polyolefin-Zusammensetzung umfasst

(a) mindestens 85 Gew.-%, basierend auf dem Gesamtgewicht der Polyolefin-Zusammensetzung, von dem ersten heterophasischen Propylen-Copolymer (HECO1);

(b) 0,5 bis 10 Gew.-%, basierend auf dem Gesamtgewicht der Polyolefin-Zusammensetzung, des zweiten heterophasischen Propylen-Copolymers (HECO2);
(c) gegebenenfalls bis zu 2 Gew.-%, basierend auf dem Gesamtgewicht der Polyolefin-Zusammensetzung, von einem Keimbildungs-Mittel, wie einem $\alpha$-Keimbildungs-Mittel.

**16.** Verwendung nach Anspruch 14 oder 15, wobei die Polyolefin-Zusammensetzung wie in einem der vorangehenden Ansprüche 1 bis 10 definiert ist.

## Revendications

**1.** Composition de polyoléfine comprenant

(a) un premier copolymère de propylène hétérophasique (HECO1) présentant

(i) un indice de fluage $MFR_2$ (230°C), mesuré conformément à la norme ISO 1133, situé dans la plage allant de 40,0 à 60,0 g/10 min, et
(ii) une teneur en composés solubles dans le xylène froid (XCS), déterminée conformément à la norme ISO 16152 (25°C), d'au moins 15 % en poids,
et présentant en outre
(iii)une viscosité intrinsèque (IV), déterminée conformément à la norme DIN ISO 1628/1 (dans la décaline à 135°C) de la fraction soluble dans le xylène froid (XCS) du copolymère de propylène hétérophasique (HECO1) située dans la plage allant de 2,5 à 4,3 dl/g, et

(b) un deuxième copolymère de propylène hétérophasique (HECO2) comprenant un homopolymère de propylène (H-PP2) et un copolymère de propylène élastomère (E2), dans lequel

(i) ledit deuxième copolymère de propylène hétérophasique (HECO2) présente un indice de fluage $MFR_2$ (230°C), mesuré conformément à la norme ISO 1133, situé dans la plage allant de plus de 1,0 à 8,0 g/10 min ;
(ii) la fraction soluble dans le xylène froid (XCS) du deuxième copolymère de propylène hétérophasique (HECO2) présente une viscosité intrinsèque, déterminée conformément à la norme DIN ISO 1628/1 (dans la décaline à 135°C), située dans la plage allant de plus de 3,7 à 9,0 dl/g ; et
(iii) la teneur en comonomères de la fraction soluble dans le xylène froid (XCS) du deuxième copolymère de propylène hétérophasique (HECO2) est située dans la plage allant de 10,0 à 40,0 % en poids,

dans laquelle

- le rapport en poids du premier copolymère de propylène hétérophasique (HECO1) sur le deuxième copolymère de propylène hétérophasique (HECO2) [(HECO1)/ (HECO2)] est situé dans la plage allant de 9/1 à 200/1 ; et/ou
- la quantité du deuxième copolymère de propylène hétérophasique (HECO2) dans la composition de polyoléfine est égale ou inférieure à 10 % en poids par rapport au poids total de la composition de polyoléfine.

**2.** Composition de polyoléfine selon la revendication 1, laquelle composition de polyoléfine présente un indice de fluage $MFR_2$ (230°C), mesuré conformément à la norme ISO 1133, d'au moins 40 g/10 min, de préférence situé dans la plage allant de 40,0 à 60,0 g/10 min.

**3.** Composition de polyoléfine selon la revendication 1 ou 2, dans laquelle

(a) le deuxième copolymère de propylène hétérophasique (HECO2) présente une teneur en composés solubles dans le xylène froid (XCS), déterminée conformément à la norme ISO 16152 (25°C), inférieure à 15 % en poids, de préférence située dans la plage allant de 8,0 à 35 % en poids,
et/ou
(b) l'homopolymère de propylène (H-PP2) du deuxième copolymère de propylène hétérophasique (HECO2) présente un indice de fluage $MFR_2$ (230°C), mesuré conformément à la norme ISO 1133, situé dans la plage allant de plus de 15 à 400 g/10 min.

**4.** Composition de polyoléfine selon l'une quelconque des revendications précédentes, dans laquelle le deuxième

copolymère de propylène hétérophasique (HECO2) satisfait à l'inégalité (IV)

$$0,50 \geq (0,241 \times \frac{C}{\% \text{ pds}}) - (1,14 \times \frac{IV}{dl/g}) \quad (IV)$$

dans laquelle

C est la teneur en comonomères, % en poids, de la fraction soluble dans le xylène froid (XCS) du deuxième copolymère de propylène hétérophasique (HECO2), et
IV est la viscosité intrinsèque, en dl/g, de la fraction soluble dans le xylène froid (XCS) du deuxième copolymère de propylène hétérophasique (HECO2).

**5.** Composition de polyoléfine selon l'une quelconque des revendications précédentes, dans laquelle

(i) le premier copolymère de propylène hétérophasique (HECO1) présente une teneur en comonomères située dans la plage allant de 6,0 à 17,0 % en poids,
et/ou
(ii) la teneur en comonomères, de préférence la teneur en éthylène, de la fraction soluble dans le xylène froid (XCS) du premier copolymère de propylène hétérophasique (HECO1), est d'au moins 26 % en poids, de préférence située dans la plage allant de 26 à 40 % en poids.

**6.** Composition de polyoléfine selon l'une quelconque des revendications précédentes, dans laquelle le deuxième copolymère de propylène hétérophasique (HECO2) présente une teneur en comonomères inférieure à 20,0 % en poids.

**7.** Composition de polyoléfine selon l'une quelconque des revendications précédentes, dans laquelle le premier copolymère de propylène hétérophasique (HECO1) comprend un polypropylène (PP1) servant de matrice et un copolymère de propylène élastomère (E1) dispersé dans ladite matrice, et dans laquelle de préférence

(i) ledit polypropylène (PP1) est un homopolymère de propylène (H-PP1),
et/ou
(ii) ledit polypropylène (PP1) présente un indice de fluage $MFR_2$ (230°C), mesuré conformément à la norme ISO 1133, de 60 à 400 g/10 min.

**8.** Composition de polyoléfine selon l'une quelconque des revendications précédentes, laquelle composition de polyoléfine comprend de plus jusqu'à 2,0 % en poids d'un agent de nucléation, par rapport au poids total de la composition de polyoléfine, de préférence dans laquelle l'agent de nucléation est un agent d'$\alpha$-nucléation.

**9.** Composition de polyoléfine selon l'une quelconque des revendications précédentes, laquelle composition de polyoléfine comprend

(a) au moins 85 % en poids, par rapport au poids total de la composition de polyoléfine, du premier copolymère de propylène hétérophasique (HECO1) ;
(b) 0,5 à 10 % en poids, par rapport au poids total de la composition de polyoléfine, du deuxième copolymère de propylène hétérophasique (HECO2) ;
(c) éventuellement jusqu'à 2,0 % en poids, par rapport au poids total de la composition de polyoléfine, d'un agent de nucléation tel qu'un agent d'$\alpha$-nucléation.

**10.** Composition de polyoléfine selon l'une quelconque des revendications précédentes, laquelle composition de polyoléfine présente

(a) un module en traction, mesuré conformément à la norme ISO 572-2, d'au moins 1310 MPa, par exemple situé dans la plage allant de 1310 à 1500 MPa ;
et/ou
(b) une résistance au choc Charpy sur barreau entaillé, mesurée conformément à la norme ISO 179 2C / DIN

53453 (à -20°C), d'au moins 4,0 kJ/m$^2$, par exemple située dans la plage allant de 4,0 à 6,0 kJ/m$^2$, et/ou une résistance au choc Charpy sur barreau entaillé, mesurée conformément à la norme ISO 179 2C / DIN 53453 (à 23°C), d'au moins 9,0 kJ/m$^2$, par exemple située dans la plage allant de 9,0 à 13,0 kJ/m$^2$ ;
et/ou
(c) une énergie de perforation (à 23°C), mesurée conformément à la norme ISO 6603-2, d'au moins 10,0 J, par exemple située dans la plage allant de 10,0 à 14,0 J.

**11.** Matériau d'emballage comprenant au moins 60 % en poids, de préférence au moins 80 % en poids, de la composition de polyoléfine selon l'une quelconque des revendications 1 à 10.

**12.** Matériau d'emballage selon la revendication 11, lequel matériau d'emballage est un matériau d'emballage à parois minces présentant une épaisseur égale ou inférieure à 2 mm.

**13.** Utilisation d'une composition de polyoléfine selon l'une quelconque des revendications 1 à 10 pour la production d'un matériau d'emballage, tel qu'un matériau d'emballage à parois minces présentant une épaisseur égale ou inférieure à 2 mm.

**14.** Utilisation d'un copolymère de propylène hétérophasique (HECO2) dans une composition de polyoléfine pour améliorer la résistance à la perforation de ladite composition de polyoléfine, dans laquelle la quantité du deuxième copolymère de propylène hétérophasique (HECO2) dans la composition de polyoléfine est égale ou inférieure à 10 % en poids par rapport au poids total de la composition de polyoléfine, et dans laquelle en outre le deuxième copolymère de propylène hétérophasique (HECO2) comprend un homopolymère de propylène (H-PP2) et un copolymère de propylène élastomère (E2),

(i) ledit copolymère de propylène hétérophasique (HECO2) présente un indice de fluage $MFR_2$ (230°C), mesuré conformément à la norme ISO 1133, situé dans la plage allant de plus de 1,0 à 8,0 g/10 min ;
(ii) la fraction soluble dans le xylène froid (XCS) du deuxième copolymère de propylène hétérophasique (HECO2) présente une viscosité intrinsèque, déterminée conformément à la norme DIN ISO 1628/1 (dans la décaline à 135°C), située dans la plage allant de plus de 3,7 à 9,0 dl/g ; et
(iii) la teneur en comonomères de la fraction soluble dans le xylène froid (XCS) du deuxième copolymère de propylène hétérophasique (HECO2) est située dans la plage allant de 10,0 à 40,0 % en poids,

de préférence l'amélioration de la résistance à la perforation est obtenue si l'énergie de perforation à basse température, à -20°C, de la composition de polyoléfine comprenant le deuxième copolymère de propylène hétérophasique (HECO2), est supérieure d'au moins 1,8 J à celle de la même composition de polyoléfine mais sans le deuxième copolymère de propylène hétérophasique (HECO2).

**15.** Utilisation selon la revendication 14, dans laquelle la composition de polyoléfine comprend

(a) au moins 85 % en poids, par rapport au poids total de la composition de polyoléfine, du premier copolymère de propylène hétérophasique (HECO1) ;
(b) 0,5 à 10 % en poids, par rapport au poids total de la composition de polyoléfine, du deuxième copolymère de propylène hétérophasique (HECO2) ;
(c) éventuellement jusqu'à 2,0 % en poids, par rapport au poids total de la composition de polyoléfine, d'un agent de nucléation tel qu'un agent d'$\alpha$-nucléation.

**16.** Utilisation selon la revendication 14 ou 15, dans laquelle la composition de polyoléfine est telle que définie dans l'une quelconque des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9924478 A
- WO 9924479 A
- WO 0068315 A
- EP 0887379 A
- WO 9212182 A
- WO 2004000899 A
- WO 2004111095 A
- WO 8707620 A
- WO 9219653 A
- WO 9219658 A
- EP 0491566 A
- EP 491566 A
- EP 591224 A
- EP 586390 A
- EP 1183307 A1


### Non-patent literature cited in the description


- Plastic Additives Handbook. 20081 of Hans Zweifel. 976-982
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun,* 2007, vol. 28, 1128
- **CHENG, H. N.** *Macromolecules,* 1984, vol. 17, 1950
- **L. RESCONI ; L. CAVALLO ; A. FAIT ; F. PIEMONTESI.** *Chem. Rev.,* 2000, vol. 100 (4), 1253
- **W-J. WANG ; S. ZHU.** *Macromolecules,* 2000, vol. 33, 1157
- **WANG, W-J. ; ZHU, S.** *Macromolecules,* 2000, vol. 33, 1157
- *Macromolecules,* 2000, vol. 33, 1157
- **KAKUGO, M. ; NAITO, Y. ; MIZUNUMA, K. ; MIYATAKE, T.** *Macromolecules,* 1982, vol. 15, 1150